# FASCICULE DE BREVET EUROPEEN

(11) **EP 4 612 054 B1**
(45) Date de publication et mention de la délivrance du brevet: **02.12.2026**
(21) Numéro de dépôt: 23813013.2
(22) Date de dépôt: 30.10.2023
(51) Int. Cl.: B64D 27/00, B64C 11/00, B64D 27/14

(54) **PROPULSEUR AÉRONAUTIQUE À INTÉGRATION AMÉLIORÉE**
AERONAUTISCHES TRIEBWERK MIT VERBESSERTER INTEGRATION
AERONAUTICAL THRUSTER WITH IMPROVED INTEGRATION

(30) Priorité: 31.10.2022 FR 2211374
(43) Date de publication de la demande: 10.09.2025
(73) Titulaire: SAFRAN AIRCRAFT ENGINES, 75015 Paris (FR)
(72) Inventeur: GEA AGUILERA, Fernando, 77550 MOISSY-CRAMAYEL (FR); DUBOIS, Adrien, Clément, Marcel, 77550 MOISSY-CRAMAYEL (FR); GRUBER, Mathieu, Simon, Paul, 77550 MOISSY-CRAMAYEL (FR); LEBEAULT, Eva, Julie, 77550 MOISSY-CRAMAYEL (FR); BINDER, Anthony, 77550 MOISSY-CRAMAYEL (FR); WIART, Ludovic, Mathieu, Rene, 77550 MOISSY-CRAMAYEL (FR)
(74) Mandataire: Ernest Gutmann - Yves Plasseraud S.A.S.
(86) Numéro de dépôt international: PCT/FR2023/051716
(87) Numéro de publication internationale: WO 2024/094949

(56) Documents cités:
- EP-A1- 3 339 180
- FR-A1- 3 083 207
- US-A1- 2017 313 430
- US-A1- 2021 222 575

## Description

### Domaine technique

La présente divulgation relève du domaine des propulseurs aéronautiques d'axe longitudinal comprenant chacun un moyeu et (au moins) deux rangées annulaires de pales non carénées, l'une amont, l'autre aval, le long de l'axe longitudinal.7

Conformément à ce qui précède et à ce qui suit, dans tout le texte, les qualificatifs relatifs « amont » et « aval » sont définis l'un par rapport à l'autre en référence à l'écoulement, en phase de vol de croisière, des gaz dans la turbomachine dans la direction longitudinale (i.e. la direction de l'axe longitudinal).

Le propulseur aéronautique peut comprendre (au moins) un moteur thermique, en particulier turbomachine, turbomoteur, turboréacteur, turbosoufflante, et/ou (au moins) un moteur électrique, et/ou (au moins) un moteur à hydrogène, et/ou (au moins) un moteur hybride : thermique et/ou électrique et/ou à hydrogène.

### Technique antérieure

On se réfèrera ci-après plus particulièrement, et donc à titre non limitatif, au cas des turbomachines, dès lors que le(s) type(s) de moteur que comprend le propulseur n'est pas ici déterminant. Par turbomachine, il est entendu un propulseur dans lequel il y a un échange d'énergie entre un fluide en écoulement et un rotor.

Dans ce cadre, on rappelle, à titre d'exemple, qu'une turbomachine à soufflante « non carénée » (ou turbopropulseur de type « Propfan » ou « Open Fan » ou « Open rotor » ou « Counter-Rotating Open Rotor ») est un type de turbomachine dans laquelle la soufflante s'étend en dehors du carter moteur (ou nacelle), contrairement aux turbomachines classiques (de type « Turbofan ») dans lesquelles la soufflante est carénée.

L'absence de carénage, à l'image des turbomachines non carénées, entraine une augmentation du niveau de bruit émis par les propulseurs aéronautiques, lesquels comprennent typiquement au moins une rangée rotorique amont dont les pales impactent les pales d'une rangée statorique aval.

En effet, le bruit généré par les rangées annulaires de pales non carénées se propage en champs lib Une cause principale du bruit émis est liée à des structures tourbillonnaires générées dans l'écoulement d'air au niveau des extrémités radialement externes libres des pales de la rangée rotorique. Ces tourbillons de bout de pale peuvent interagir avec les pales de la rangée statorique aval.

L'un des défis de ces architectures est la certification des niveaux sonores lors des opérations de décollage et d'atterrissage. Les niveaux sonores émis par les avions sont soumis à des réglementations de plus en plus strictes.

En outre, une considération importante peut être d'assurer l'intégration du propulseur, en particulier de son système de changement de calage de pales s'il en possède, ceci en liaison avec la présence :
- d'un pylône, ou mât ou berceau de fixation (voir ci-après « structure de fixation ») de ce propulseur à une voilure ou un fuselage de l'aéronef à propulser, et
- en particulier d'une proéminence sur ladite structure de fixation qui modifie localement l'écoulement autour de la structure de fixation.
Les documents US 2017/313430 A1, FR 3 083 207 A1 et US 2021/222575 A1 divulguent des ensembles propulsifs de l'art antérieur.

La présente description vise à proposer une solution à ces inconvénients.

### Résumé

A ce stade, il est d'emblée précisé que, même si l'art antérieur qui précède est donc relatif à une turbomachine, la solution de l'invention s'applique à tout propulseur aéronautique non caréné et/ou de type « Open Rotor », dès lors qu'une partie de la problématique précitée n'est pas nécessairement spécifique au type de propulseur aéronautique précité.

Dans ce cadre, il est donc ici, et de façon générale, proposé un ensemble propulsif pour un aéronef :
- l'ensemble comportant un propulseur aéronautique ayant un axe longitudinal (X) et comprenant un carter et, espacées l'une de l'autre suivant ledit axe longitudinal (X), une rangée annulaire amont de pales rotoriques, non carénées, et une rangée statorique aval de pales statoriques, non carénées et s'étendant autour du carter, deux pales adjacentes de ladite rangée statorique aval de pales statoriques présentant entre elles, autour de l'axe longitudinal (X), un espacement azimutal (Δθ, Δθᵢ) défini par l'angle entre des axes respectifs :
   -- soit d'adaptation d'un angle de calage desdites deux pales adjacentes, lorsque ces axes sont projetés dans un plan perpendiculaire à l'axe longitudinal (X) et si lesdites deux pales adjacentes sont à angle de calage variable,
   -- soit radiaux à l'axe longitudinal (X) et passant par les extrémités radialement internes ou les extrémités radialement externes desdites deux pales adjacentes, respectivement, si lesdites deux pales adjacentes sont à angle de calage fixe,
   -- soit, pour l'un desdits axes respectifs, d'adaptation d'un angle de calage de l'une desdites deux pales adjacentes, lorsque la pale est à angle de calage variable, et, l'autre, radial à l'axe longitudinal (X) et passant par l'extrémité radialement interne ou par l'extrémité radialement externe ou par le centre de gravité, est celui d'une pale à angle de calage fixe,
- l'ensemble comportant en outre une structure de fixation du propulseur aéronautique à l'aéronef, la structure de fixation étant fixée au carter et présentant, ou définissant, vu dans un plan (P1) perpendiculaire audit axe longitudinal (X) et de préférence intersectant au moins partiellement l'une des pales de la rangée statorique aval, une proéminence s'étendant entre deux pales de ladite rangée statorique aval de pales statoriques ou de façon axialement adjacente à elles, et
- autour de l'axe longitudinal (X), on définit une position angulaire à 12H comme positionnée verticalement vers le haut par rapport à l'axe longitudinal (X) et une position angulaire à 6H comme positionnée verticalement vers le bas par rapport à l'axe longitudinal (X),
l'ensemble étant caractérisé en ce que l'espacement azimutal entre lesdites deux pales adjacentes, quand elles sont situées de part et d'autre de la structure de fixation et/ou de ladite proéminence, dans un plan perpendiculaire à l'axe longitudinal (X), est entre 1° et 75° supérieur, de préférence entre 5° et 40° supérieur ou encore de préférence entre 8° et 20° supérieur, au plus petit espacement azimutal existant sur ladite rangée statorique aval de pales statoriques.

Autrement dit : l'espacement azimutal entre lesdites deux pales adjacentes, quand elles sont situées de part et d'autre de la structure de fixation et/ou de ladite proéminence, dans un plan perpendiculaire à l'axe longitudinal (X) s'étend azimutalement (ou circonférentiellement autour de l'axe longitudinal X) sur un secteur angulaire qui est entre 1° et 75° supérieur, de préférence entre 5° et 40° supérieur, ou encore de préférence entre 8° et 20° supérieur, au plus petit espacement azimutal existant sur ladite rangée statorique aval de pales statoriques.

Encore autrement dit :
- la répartition des pales de stator autour de l'axe longitudinal (X) du propulseur aéronautique est hétérogène ; certains au moins des espacements azimutaux des pales du stator sont différents entre eux. Hétérogène, non homogène, irrégulière et non uniforme sont ici des synonymes concernant cette répartition azimutale, autour donc de l'axe longitudinal X, et
- sous le carter précité, c'est-à-dire dans la nacelle, notamment en présence d'un pylône, berceau ou mât, il pourra être utile de prévoir un espacement azimutal, tel que Δθᵢ ou Δθⱼ, augmenté entre les deux pales de stator d'un côté et de l'autre de la structure de fixation et/ou de ladite proéminence.

Un synonyme de proéminence est : moyeu non-axisymétrique autour de l'axe longitudinal X et vu dans un plan (P1) perpendiculaire audit axe longitudinal (X), de préférence intersectant au moins partiellement l'une des pales de la rangée statorique aval.

L'ensemble comporte au moins trois espacements azimutaux distincts. La mise en oeuvre d'au moins trois espacements azimutaux distincts permet de faciliter l'intégration à la nacelle de la proéminence et d'autres équipements additionnels, tels qu'un réservoir d'huile, une pompe à carburant ou à huile, un actionneur, ou encore système de réglage de l'angle de calage. De plus, une configuration avec au moins trois espacements azimutaux distincts permet, en plus de l'intégration de la proéminence, d'implémenter un espacement azimutal plus large dans les zones à écoulement tourbillonnaire, par exemple en partie basse de l'ensemble, et ainsi de limiter la génération de bruit en fonctionnement.

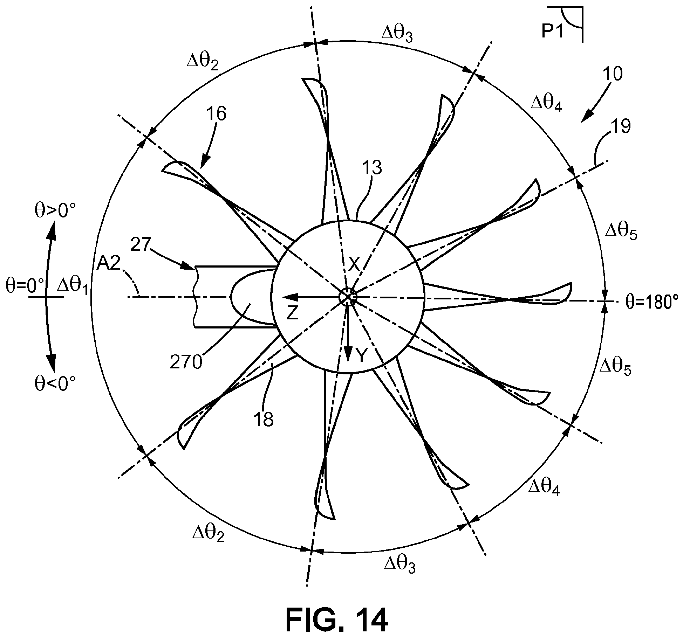

Dans le texte, Δθᵢ et Δθⱼ définissent respectivement deux espacements azimutaux distincts entre deux aubes adjacentes quelconques. I et j sont des indices (nombres entiers naturels : i,j=1,2, ...) distincts lorsque i#j et inférieurs ou égaux a nombre de pales statoriques (i,j ≤ V), V définissant le nombre de pales sur la rangée statorique aval de pales statoriques. Autrement dit : i et j sont différents et peuvent prendre une valeur (quelconque) de nombre entier parmi 1, 2, 3, ... et (au maximum) V. Et, uniquement lorsque tous les espacements azimutaux sont différents/hétérogènes, i ou j peuvent prendre la valeur i=V ou j=V. Ainsi, Δθᵢ peut être égal à Δθ₁, Δθ₂, Δθ₃, Δθ₄ ou Δθ₅, comme par exemple sur la figure 14. Comme conventionnellement, les positions 3H, 6H, 9H, 12H sont considérées comme sur une horloge et orientées dans le sens des aiguilles d'une montre, vu de face, depuis l'amont/l'avant sur le propulseur ou l'aéronef considéré.

Conventionnellement également, l'angle de calage d'une pale peut être l'angle formé par la corde de l'un des profils et le plan de rotation de la pale. La pale étant vrillée, par convention on dit que le calage est celui du profil se situant à 70% du rayon maximum.

D'un point de vue « intégration », une répartition hétérogène de pales de stator permet donc de contourner les servitudes sous le carter ou le moyeu, réduire la remontée de pression de la voilure/surface portante à l'aval des pales de stator et/ou éviter l'interaction des sillages du stator avec la voilure, ainsi que de s'adapter à l'intégration du pylône si nécessaire. A noter qu'il est connu que le pylône soit situé à l'amont des pales de rotor/stator (configuration dite « pusher »), à la différence d'une configuration privilégiée type « puller » avec le pylône à l'aval ou au niveau des pales de stator, pour une architecture type USF. D'un point de vue acoustique, un avantage d'une configuration type « puller » est d'éviter l'impact du sillage du pylône avec l'ensemble de pales du rotor. D'un point de vue aérodynamique, un avantage d'une configuration type « puller » est de ne pas introduire une distorsion ou hétérogénéité dans l'écoulement d'air à l'amont du rotor, ce qui peut dégrader sa performance et augmenter les phénomènes de réponse vibratoire sur les pales du rotor.

En outre, différentes solutions de l'art antérieur ne sont souvent relativement adaptées que dans une configuration isolée de la turbomachine et à incidence nulle. En effet, la présence d'éléments environnants (mât, fuselage, voilure, volets, etc.), une incidence non nulle du flux d'air perçu par le propulseur et la forme des pales de la rangée rotorique amont peuvent modifier, d'une part, la contraction et l'axisymétrie autour de l'axe longitudinal X du tube de courant de l'écoulement d'air en aval de la rangée rotorique amont, et/ou d'autre part, la taille des tourbillons présents dans l'écoulement d'air en aval de la rangée rotorique amont de sorte que la troncature des pales de la rangée statorique aval définie à partir d'une configuration isolée et à incidence nulle ne prévient plus de l'interaction entre les pales de la rangée statorique aval et les tourbillons formés par les pales de la rangée rotorique amont.

Pour parfaire l'intégration et améliorer encore l'aérodynamisme, donc limiter aussi le bruit émis, il est même proposé que la structure de fixation soit reliée à, c'est-à-dire intègre, l'une des pales de la rangée statorique aval, de sorte à former avec elle un ensemble aérodynamique unique.

On notera que ceci doit être compatible avec le fait que l'espacement azimutal le plus grand - sur toute la circonférence (de la rangée) des pales statoriques - puisse être situé entre les deux pales disposées de chaque côté de la structure de fixation (mât, berceau, pylône...).

Pour focaliser le problème du traitement de cette intégration du propulseur dans l'environnement de la proéminence précitée et éviter d'en diluer l'effet, il est aussi proposé que :
- l'espacement azimutal entre les deux pales adjacentes de la série de pales de ladite rangée statorique aval situées respectivement de part et d'autre de la proéminence soit plus important que tout autre espacement azimutal entre tout autre couple de pales adjacentes de ladite rangée statorique aval et/ou
- que tous les couples de pales adjacentes de ladite rangée statorique aval présentent entre eux un dit espacement azimutal identique, sauf le couple desdites deux pales adjacentes de la série de pales de ladite rangée statorique aval situées respectivement de part et d'autre de la proéminence.

A noter que ci-avant, mais aussi ci-après, quand il est indiqué « de part et d'autre de la proéminence » (référence 270 plus loin dans la description), on doit lire aussi « et/ou de la structure de fixation » (référence 27 plus loin dans la description).

Pour aussi équilibrer le poids du propulseur et éviter un moment résiduel sur l'axe longitudinal X lié à la distribution hétérogène des pales de stator, il est par ailleurs proposé que les pales de ladite rangée statorique aval soient positionnées azimutalement, autour donc de l'axe longitudinal (X), de manière symétrique par rapport à un axe (A1 ou A2) perpendiculaire à l'axe longitudinal (X) et qui passe par la structure de fixation et/ou la proéminence. A noter qu'il s'agit d'un axe pouvant être contenu dans le plan P1.

Pour poursuivre dans la voie d'une intégration performante/plus simple du propulseur sur l'aéronef, la structure de fixation (pylône ou autre) pourra être inclinée d'un angle δ≠0° par rapport à l'axe 12H-6H dans un plan perpendiculaire à l'axe longitudinal (X), ce qui permettra d'augmenter la garde au sol (c'est-à-dire, la distance entre le bout de pale des pales de rotor/stator et le sol). Autrement dit, on privilégiera alors une solution où :
- la proéminence s'élèvera suivant une direction (A) verticale ou formant, par rapport à la verticale et autour de l'axe longitudinal (X), un angle (δ) non nul, tel que 1°≤ δ ≤ 30°, de préférence 1°≤ δ ≤ 15°, et préférentiellement
- une dite pale de la rangée statorique aval s'étendra suivant la position angulaire à 6H ou suivant l'angle (δ), d'un côté ou de l'autre de la position angulaire à 6H.

Autre réalisation alors possible, pour le même effet d'intégration attendu, si :
- la proéminence s'élevant donc encore suivant une direction (A) verticale ou formant, par rapport à la verticale et autour de l'axe longitudinal (X), un angle (δ) non nul, tel que 1°≤ δ ≤ 30°, de préférence 1°≤ δ ≤ 15°,
- les pales de ladite rangée statorique aval de pales statoriques présentent au moins trois espacements azimutaux (Δθᵢ) différents, les deux plus importants angulairement étant situés entre les deux pales adjacentes disposées de part et d'autre de la proéminence et entre les positions angulaires à 2H et 4H et/ou à 8H et 10H, le plus faible angulairement étant situé entre les pales disposées entre les positions angulaires à 4H et 8H.

Ceci permet de réduire le nombre de pales en partie haute (vers 12H) pour permettre l'intégration d'un système de fixation, ainsi que sur les côtés, c'est-à-dire autour des positions azimutales à 3H et à 9H. Limiter le nombre de pales sur les côtés permet de modifier la directivité du son qui est rayonné vers le sol. Cela est particulièrement performant en mode USF avec pylône ou berceau, sous aile. Toutefois, un inconvénient de ce mode de réalisation est d'avoir plus de pales concentrées vers 6H et donc, de ne pas pouvoir agir sur le bruit dirigé vers le fuselage.

Encore une autre réalisation alors possible, pour le même effet d'intégration attendu :
- si la proéminence s'élève toujours suivant une direction (A) verticale ou formant, par rapport à la verticale et autour de l'axe longitudinal (X), un angle (δ) non nul, tel que 1°≤ δ ≤ 30°, de préférence 1°≤ δ ≤ 15°, et
- que les pales de ladite rangée statorique aval de pales statoriques présentent au moins trois espacements azimutaux (Δθᵢ) différents, les deux plus importants angulairement étant situés entre les deux pales adjacentes disposées de part et d'autre de la proéminence et entre les positions angulaires à 4H et 8H, le plus faible angulairement étant situé entre les pales disposées entre les positions angulaires à 2H et 4H et/ou à 8H et 10H.

Dans ce cas, la répartition azimutale des pales de stator entre les turbomachines à droite et à gauche peut être symétrique par rapport au plan de symétrie de l'aéronef (avion) / du fuselage. Cela permet de mieux équilibrer les charges et le poids sur les pales de stator ainsi que sur l'aéronef. Par ailleurs, ceci permet de réduire le nombre de pales en partie haute (vers 12H) pour permettre l'intégration d'un système de fixation, ainsi qu'en partie basse, c'est-à-dire autour de la position azimutale à 6H. Limiter le nombre de pales en partie basse permet de modifier la directivité du son qui est rayonné vers le fuselage. Cela est particulièrement performant en mode USF avec pylône ou berceau, sous aile. Toutefois, un inconvénient de ce mode de réalisation est d'avoir plus de pales concentrées vers les côtés (autour de 3H et 9H) et donc, de ne pas pouvoir agir sur le bruit généré par les pales sur les côtés et dirigé vers le sol. D'un point de vue aérodynamique, avoir plus de pales de stator aval à l'amont du bord d'attaque de l'aile de l'aéronef (par exemple, autour des positions azimutales à 2H et 4H et/ou 8H et 10H) permet de filtrer la remontée de pression qui sera perçue par les pales du rotor amont.

Encore une autre réalisation alors possible, pour le même effet d'intégration attendu :
- avec une dite proéminence s'élevant suivant ladite direction (A1 ou A2) qui forme ledit angle (δ) non nul, et,
- les pales de la série de pales de ladite rangée statorique aval qui sont réparties, autour de l'axe longitudinal (X), symétriquement ou de manière homogène, par rapport aux positions angulaires à 12H-6H sur un secteur angulaire tel que : 360°- Δψ > 180°.

Cela permet de mieux équilibrer le poids du propulseur aéronautique en limitant le secteur angulaire (Δψ) où les pales de stator ne sont pas réparties de manière symétrique par rapport à l'axe 12H-6H.

Δψ correspond au secteur angulaire autour de l'axe principal X où la répartition d'espacement azimutaux entre les stators n'est pas symétrique par rapport à un axe (par exemple, l'axe 12H-6H) compris dans un plan perpendiculaire à l'axe longitudinal X.

Autrement dit, dans le secteur angulaire Δψ, tous les espacements azimutaux sont différents, tandis que dans le secteur angulaire 360° - Δψ au moins 2 espacements azimutaux sont égaux.

Autre proposition pertinente :
- la proéminence s'étend suivant une direction (A2) horizontale ou formant, par rapport à l'horizontale et autour de l'axe longitudinal (X), un angle (δ) non nul, tel que 1°≤ δ ≤ 30°, de préférence 1°≤ δ ≤ 15°, et
- une dite pale de la rangée statorique aval s'étend suivant la position angulaire à 3H ou suivant l'angle (δ), d'un côté ou de l'autre de la position angulaire à 3H ou à 9H.

Cela permet d'intégrer la proéminence au niveau d'un mât lorsque le propulseur aéronautique est installé en arrière et attaché au fuselage par un mât. L'angle δ permet ici de mieux intégrer le propulseur aéronautique en réduisant les hétérogénéités dans l'écoulement incidence qui sont perçues par les pales de rotor. Par exemple, cela permet de limiter l'effet de l'incidence/angle de l'écoulement à l'aval de la voilure lorsque le propulseur est en installation vers l'arrière du fuselage.

Encore trois autres propositions pertinentes, particulièrement adaptées à une situation de fixation latérale du propulseur au fuselage (qui peut être faite via un mât), sur un côté de celui-ci, :
- la proéminence s'étend suivant une direction (A2) horizontale ou formant, par rapport à l'horizontale et autour de l'axe longitudinal (X), un angle (δ) non nul, tel que 1°≤ δ ≤ 30°, de préférence 1°≤ δ ≤ 15°, et
- soit les pales de ladite rangée statorique aval de pales statoriques (16) présentent au moins trois espacements azimutaux (Δθᵢ) différents, les deux plus importants angulairement étant situés entre les deux pales adjacentes (18a,18b) disposées de part et d'autre de la proéminence et entre les positions angulaires à 4H et 8H et/ou à 10H et 2H, le plus faible angulairement étant situé entre les pales (18) disposées entre les positions angulaires à 2H et 4H,
- soit les pales de ladite rangée statorique aval de pales statoriques présentent au moins trois espacements azimutaux (Δθᵢ) différents, les deux plus importants angulairement étant situés entre les deux pales adjacentes disposées de part et d'autre de la proéminence et entre les positions angulaires à 1H30 et 4H30, le plus faible angulairement étant situé entre les pales disposées entre les positions angulaires à 10H30 et 1H30 et/ou à 4H30 et 7H30,
- soit les pales de la série de pales de ladite rangée statorique aval sont réparties, autour de l'axe longitudinal (X), symétriquement ou de manière homogène, par rapport aux positions angulaires à 3H-9H sur un secteur angulaire tel que : 360°- Δψ > 180°.

A noter toutefois que l'expression « soit » ci-dessus n'empêche pas de combiner au moins deux des alternatives mentionnées.

Δψ correspond au secteur angulaire autour de l'axe principal X où la répartition d'espacement azimutaux entre les pales de stator n'est pas symétrique par rapport à un axe (par exemple, l'axe 3H-9H) compris dans un plan perpendiculaire à l'axe longitudinal X.

Une autre proposition concerne le cas dans lequel, sur ledit secteur angulaire (360°- Δψ), il y a au moins deux espacements azimutaux (Δθᵢ) identiques.

Cela permet de simplifier la répartition azimutale des pales statoriques, ce qui peut être bénéfique pour mieux équilibrer la répartition de poids et des moments autour de l'axe principal X, ainsi que pour mieux répartir la charge sur les pales statoriques.

Dans ce mode de réalisation, favorable en particulier avec une dite structure de fixation (pylône ou autre) inclinée (δ≠0° ; 6H et 12H ne sont pas sur une même verticale aéronef posé sur un sol horizontal), la grille de stators peut être symétrique par rapport à l'axe 12H-6H sur un secteur angulaire tel que : 360°- Δψ > 180°. Dans ce secteur angulaire, il y a donc au moins deux espacements (Δθᵢ) identiques.

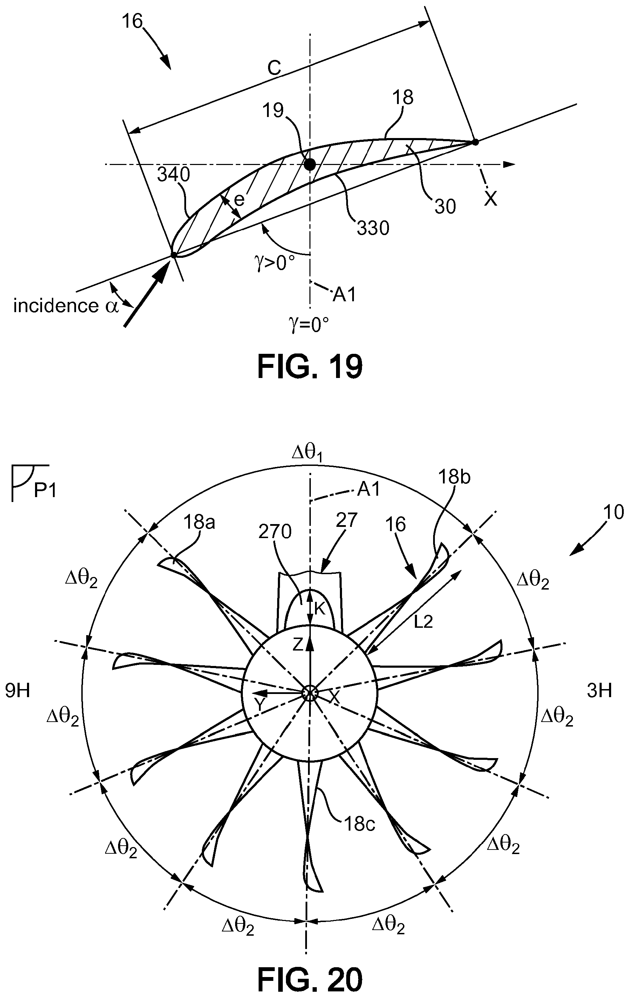

Cela permet de simplifier la répartition azimutale des pales statoriques, ce qui peut être bénéfique pour mieux équilibrer la répartition de poids et des moments autour de l'axe principal X, ainsi que pour mieux répartir la charge sur les pales statoriques. Lorsque les espacements azimutaux sont identiques, les stators à concevoir peuvent être également identiques. Cependant, lorsqu'on a un nombre important d'espacements azimutaux différents, cela implique qu'on a plus de familles de pales de stator avec des propriétés géométriques (corde C figure 19), cambrure, épaisseur e figure 19, ...) différentes. Par exemple, augmenter l'espacement entre les pales diminue la solidité, C/E, des pales. Afin de garder une solidité relativement constante, on devrait augmenter la corde des pales où l'espacement augmente. Toutefois, il est préférable de limiter le nombre d'espacements différents, ce qui réduit le nombre de pales de stator aval différentes à concevoir et fabriquer, et donc permet de réduire les coûts. Par ailleurs, l'inclinaison de la structure de fixation (δ) permet ici de mieux intégrer le propulseur aéronautique en réduisant les hétérogénéités dans l'écoulement incidence qui sont perçues par les pales de rotor. Par exemple, cela permet de limiter l'effet de l'incidence/angle de l'écoulement à l'aval de la voilure lorsque le propulseur est installée vers l'arrière du fuselage.

Encore une autre proposition concerne le cas dans lequel tous les espacements azimutaux (Δθᵢ) sont différents dans le secteur angulaire complémentaire dudit secteur angulaire tel que : 360°-Δψ > 180°.

Cela permet de mieux adapter le fonctionnement aérodynamique des pales du stator aval. Par exemple, cela permettrait d'adapter les positions azimutales des pales du stator aval pour que l'écoulement puisse contourner facilement (sans décollements, pertes aérodynamiques, ...) la structure de fixation et/ou la proéminence, ainsi que pour réduire l'interaction des sillages des pales du stator aval avec l'aile, le mât, et/ou d'autres éléments de l'aéronef à proximité (becs, volets, ...).

Encore une autre proposition concerne le cas dans lequel :
- l'une des pales de ladite rangée statorique aval de pales statoriques est située à 6H, ou,
- au moins l'une des pales de ladite rangée statorique aval de pales statoriques est située entre 5H et 7H.

Cela pourrait permettre l'intégration de certains sous-systèmes à cette position « basse », tels que le circuit de récupération de l'huile qui bénéficiera alors d'un effet « gravité ».

Encore une autre proposition concerne le cas dans lequel au moins l'une des pales du couple desdites deux pales adjacentes - de la série de pales de ladite rangée statorique aval - situées respectivement de part et d'autre de la proéminence est à calage fixe et/ou présente un angle de calage (γ) hétérogène, c'est-à-dire un angle de calage différent de celui d'autres pales de la rangée statorique aval (hétérogène = qui varie, qui n'est pas unique partout).

En effet, la proéminence peut empêcher l'intégration du système de calage variable sur les pales statoriques de part et de l'autre de la proéminence. Par ailleurs, il est possible d'imaginer des calages hétérogènes de part et de l'autre de la proéminence pour optimiser leur fonctionnement aérodynamique (c'est-à-dire, permettre à l'écoulement de mieux contourner la proéminence sans pertes aérodynamiques, tels que celles introduites par les décollements, ...).

Encore une autre proposition concerne le cas dans lequel l'axe longitudinal du propulseur aéronautique (X) défini un angle *β* avec l'axe longitudinal de l'aéronef (X1), tel que (la valeur absolue de) l'angle ∥*β*∥ est peut varier entre 0,5° et 30°, de préférence entre 2° et 20°, ou encore de préférence entre 3° et 10°. L'axe longitudinal du fuselage (ou de l'aéronef, axe X1 ci-après) peut être défini comme l'axe de roulis de l'aéronef, qui peut correspondre à un axe allant du nez (à l'amont) à la queue (à l'aval) du fuselage, ou alternativement à l'axe qui passe par la position la plus à l'amont et la plus à l'aval du fuselage en vol de croisière. Ces axes X et X1 peuvent donc ne pas être parallèles (*β* ≠ 0°).

En effet, lorsqu'on installe le propulseur aéronautique, normalement celui présente un certain angle d'inclinaison (*β*) par rapport à l'axe de l'aéronef. Cela permet de réduire l'incidence de l'écoulement perçue par les pales non-carénées lors des phases de décollage/atterrissage. Cela permet à la fois de réduire le bruit (réduction des décollements autour des pales liés à une sur-incidence), ainsi que les efforts 1P. Cela peut donc influencer la distribution hétérogène de pales statoriques dans la direction azimutale.

L'aspect « valeur absolue » de l'angle *β* importe au moins car, pour limiter les effets d'incidence en phase de décollage/atterrissage, l'inclinaison est typiquement vers le bas en installation sous-aile/sous voilure, mais pourrait être vers le haut en installation vers l'arrière du fuselage.

Encore une autre proposition concerne le cas dans lequel il existe un plan (P1) perpendiculaire audit axe longitudinal (X) et intersectant au moins l'une des pales (18) du stator aval 16 dans lequel le rapport entre la hauteur ou épaisseur K (voir exemple non limitatif figure 20) de la proéminence et la hauteur d'au moins l'une des pales statoriques d'un côté ou de l'autre de la proéminence est tel que 0,02 ≤ K/L2 ≤0,9 , ou de préférence 0,04 ≤ K/L2 ≤0,4. Cette caractéristique permet à la fois d'assurer le transfert des efforts mécaniques du moteur à l'aéronef, et de limiter la perturbation aérodynamique liée à la proéminence.

Au moins pour une uniformisation/limitation des sillages et une limitation du bruit, il est aussi proposé qu'il y ait au moins 2 familles de pales statoriques dans la rangée de pales statoriques, de préférence au moins 3 familles de pales statoriques, et dans lequel chaque famille de pales statoriques comprenne une ou plusieurs pales statoriques ayant les mêmes caractéristiques géométriques (comprenant au moins la corde (C), l'épaisseur (e), la hauteur (telle que L2, ou L21 ci-après) d'une pale statorique) dans laquelle au moins une desdites caractéristiques géométriques (au moins corde, épaisseur, hauteur) est différente des mêmes caractéristiques géométriques (corde, épaisseur, hauteur) des pales statoriques d'une autre famille de pales statoriques.

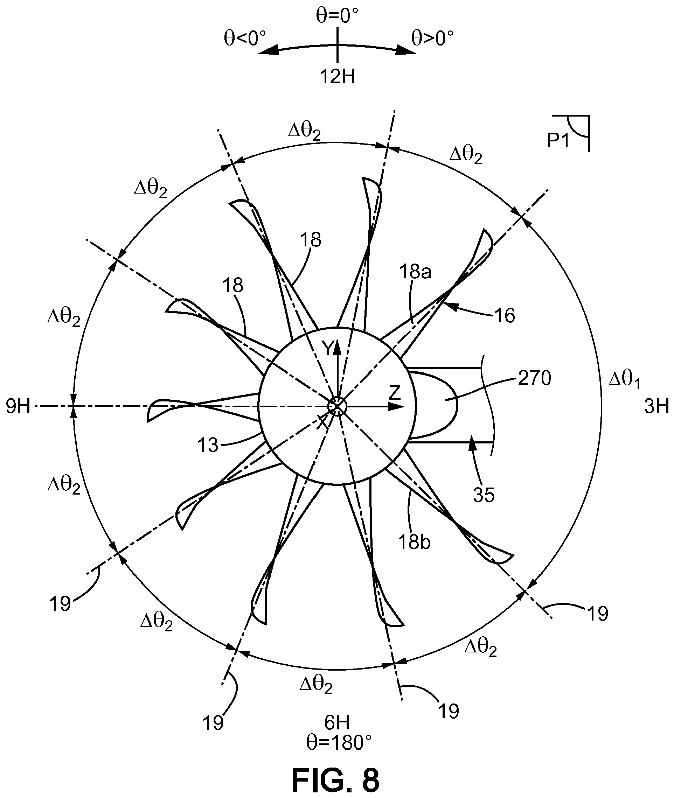

Par ailleurs, pour favoriser là aussi un contrôle plus équilibré des charges sur les pales et du bruit généré, il est proposé :
- que chaque pale de la rangée statorique aval de pales statoriques présentant donc une hauteur (voir L2 ou L21 dans l'exemple non limitatif de la figure 8 cité ci-après), entre l'extrémité radialement interne et l'extrémité radialement externe,
- les hauteurs respectives, telles donc que L2 et L21, d'au moins deux pales de ladite rangée statorique aval soient utilement et avantageusement différentes.

Encore une autre proposition concerne le cas dans lequel la proéminence est symétrique dans un plan P1 selon un axe perpendiculaire à l'axe principale X du propulseur aéronautique. Un but est de simplifier la conception de la géométrie de la proéminence.

Encore une autre proposition concerne le cas dans lequel l'axe de référence de la structure de fixation et/ou de sa proéminence est l'axe suivant lequel la structure de fixation ou la proéminence s'étend et de part et d'autre duquel existe la situation où (360°/V) +2°≤ Δθᵢ ≤ (360°/V)+45°, ou de préférence (360°/V) +5°≤ Δθᵢ ≤ (360°/V)+25°.

Cela doit permettre d'assurer que le Δθᵢ autour de la protubérance est suffisant (ou assez grand) pour installer la structure de fixation, mais pas trop grand pour éviter d'avoir un espacement azimutale pénalisant pour l'aérodynamique (pas de récupération de la giration de l'écoulement) entre deux pales adjacentes d'un côté et d'autre de la protubérance.

Encore une autre proposition concerne le cas dans lequel, sur la rangée statorique aval de pales statoriques, il existe un rapport C/E entre la corde, C, et l'espacement azimutal E entre deux pales de stator consécutives, autour de de l'axe longitudinal (X) tel que C/E est inférieur à 3 sur l'ensemble de l'envergure, de préférence inférieur à 1 aux extrémités radialement externes de deux pales axialement consécutives.

Ce critère sera utilement respecté pour un nombre de pales de stator (entre 8 et 14 de préférence) que l'on pourra choisir de privilégier. Un avantage à une solidité (rapport C/E) faible (C/E de préférence inférieur à 1 en tête/extrémité libre de la pale) est de réduire les interactions d'aube à aube. D'un point de vue aérodynamique, si C/E est grand (supérieur à 3 ou 4), le canal ou section de passage de l'écoulement entre les pales est réduit. Cela augmente la vitesse de l'écoulement entre les pales, ce qui peut produire la génération d'ondes de chocs (entre les pales) et donc des pertes de rendement à certains points de fonctionnement. D'un point de vue acoustique, plus la solidité (C/E) est faible plus on réduit la corrélation des sources de bruit entre les pales.

Outre ce qui précède, est aussi ici concerné un aéronef présentant un axe longitudinal d'aéronef (X1), l'aéronef comprenant une structure d'aéronef (ou bâti), à laquelle est fixée ladite structure de fixation du propulseur aéronautique précité.

Sur cet aéronef, on pourra en particulier trouver :
- un nombre paire de dits propulseurs aéronautiques,
- avec une dite structure de l'aéronef comprenant un fuselage,
- le fuselage présentant un plan de symétrie (P2) passant par l'axe longitudinal aéronef (X1) et pouvant être parallèle à des plans passant par les positions angulaires à 6H et 12H de chaque propulseur aéronautique,
- ledit nombre paire de propulseurs aéronautiques incluant un couple, aligné perpendiculairement au plan de symétrie (P2), de rangées annulaires amont de pales rotoriques de deux desdits propulseurs aéronautiques,
- les pales rotoriques dudit couple de rangées annulaires amont de pales rotoriques, situées de part et d'autre du fuselage, tournant dans des sens opposés, et
- la répartition azimutale des pales des rangées annulaires aval de pales statoriques, entre lesdits deux propulseurs aéronautiques, étant symétrique par rapport audit plan (P2) de symétrie.

La répartition de la rangée des pales de stator entre les propulseurs à droite et à gauche du fuselage est alors symétrique par rapport au plan de symétrie de l'aéronef / du fuselage ; et cela permet de mieux équilibrer les charges sur les pales de stator ainsi que sur l'aéronef. En effet, lorsque les pales rotoriques tournent dans des sens opposés, les pales rotoriques ascendantes et descendantes de chaque propulseur aéronautique peuvent être situées de manière symétrique (ou à une distance similaire) par rapport à l'axe de l'aéronef.

Dès lors qu'il y est fait référence ci-après, il est précisé que « l'incidence avion » (angle α ci-après) peut être définie comme l'angle entre l'axe longitudinal du fuselage (axe X1 ci-après) et la direction de l'écoulement à l'amont du fuselage (ou la direction d'avancement de l'aéronef). Il est à noter qu'il peut avoir un angle (*β*) différent de zéro degré entre l'axe longitudinal du fuselage et l'axe longitudinal du propulseur aéronautique (parfois appelé 'tilt angle' ou 'cant angle' en anglais). Ces axes peuvent ne pas être parallèles. Par exemple, cela peut être utile pour réduire l'incidence qui est perçue par le rotor lors des phases de décollage. L'axe principale X du propulseur aéronautique et l'axe du fuselage/aéronef X1 peuvent ne pas être alignés. Cela permet de réduire les effets d'installation, tel que les efforts 1P.

### Brève description des dessins

D'autres caractéristiques, détails et avantages apparaîtront à la lecture de la description détaillée ci-après, et à l'analyse des dessins annexés, sur lesquels toutes les pales sont non carénées, et :
[Fig.1] est une vue schématique partielle en coupe d'une turbomachine utilisable ici, donc à rotor amont et stator aval, dans une configuration « pusher »,
[Fig.2] est une vue schématique d'un propulseur dans une configuration qui peut être « puller », dans une phase qui peut être de décollage, avec donc une incidence avion (angle α),
[Fig.3] vue schématique partielle en coupe d'une turbomachine utilisable ici, dans une configuration « puller »,
[Fig.4] peut représenter la turbomachine de la figure 3 dans le plan de coupe IV-IV (stator) normal à l'axe longitudinal X, avec un exemple d'agencement possible de la rangée annulaire de pales du stator aval,
[Fig.5] est une vue schématique en perspective (vue de l'amont) illustrant un autre agencement de la rangée annulaire de pales du stator aval,
[Fig.6] est une vue schématique de face (vue de l'amont) illustrant l'agencement de la figure 5, selon une vue comme la figure 4,
[Fig.7] est une vue schématique en perspective (vue de l'amont) illustrant un autre agencement de la rangée annulaire de pales du stator aval,
[Fig.8] est une vue schématique de face (vue de l'amont) illustrant l'agencement de la figure 7, selon une vue comme la figure 4,
[Fig.9] schématise une autre solution, avec montage via un berceau de fixation entre le propulseur et une aile de l'aéronef,
[Fig.10] est une demi-vue schématique de face (vue de l'amont) d'exemple d'installation sous-aile d'une grille/rangée de stators type USF avec une fixation par un pylône ou un mât aligné avec l'axe qui passe par 12H et 6H,
[Fig.11] est la même demi-vue que figure 10, mais avec un pylône ou un mât incliné d'un angle δ par rapport à l'axe qui passe par 12H-6H,
[Fig.12] est une vue schématique de face (vue de l'amont) illustrant un autre agencement de la rangée annulaire de pales du stator aval, selon une vue comme la figure 4,
[Fig.13] est (comme est celle de la figure 11) une vue schématique de face (vue de l'amont) illustrant un autre agencement de la rangée annulaire de pales du stator aval, avec un angle δ non nul (voir ci-après),
[Fig.14] est une vue schématique de face (vue de l'amont) illustrant un autre agencement de la rangée annulaire de pales du stator aval, selon une vue comme la figure 4,
[Fig.15] est une vue schématique de face (vue de l'amont) illustrant un autre agencement de la rangée annulaire de pales du stator aval, selon une vue comme la figure 4,
[Fig.16] schématise une autre solution, avec montage, chacun sous une aile, de deux propulseurs à pales statoriques conformes à l'invention, comme les précédentes, à la manière de la vue de la figure 13 par exemple,
[Fig.17] schématise ce qu'est l'angle, ou « espacement azimutal » Δθᵢ ou Δθⱼ entre deux pales consécutives de stator,
[Fig.18] et,
[Fig.19] schématisent une pale statorique (pale aval) et une manière de considérer l'angle de calage de cette pale, la figure 19 correspondant à la coupe XVIII-XVIII de la figure 18, cette dernière et la figure 2 figurant des écoulements d'air autour du propulseur (lignes avec flèches multiples),
[Fig. 20] schématise une solution expliquant le rapport entre la hauteur (K, suivant la verticale du lieu) de la proéminence et la hauteur (L2) d'au moins l'une des pales statoriques, et,
[Fig. 21] schématise un cas d'incidence avion, vue de côté, avec un propulseur dans une configuration qui peut être « puller », dans une phase qui peut être de décollage, avec donc un angle β non nul, dans l'exemple.

### Description des modes de réalisation

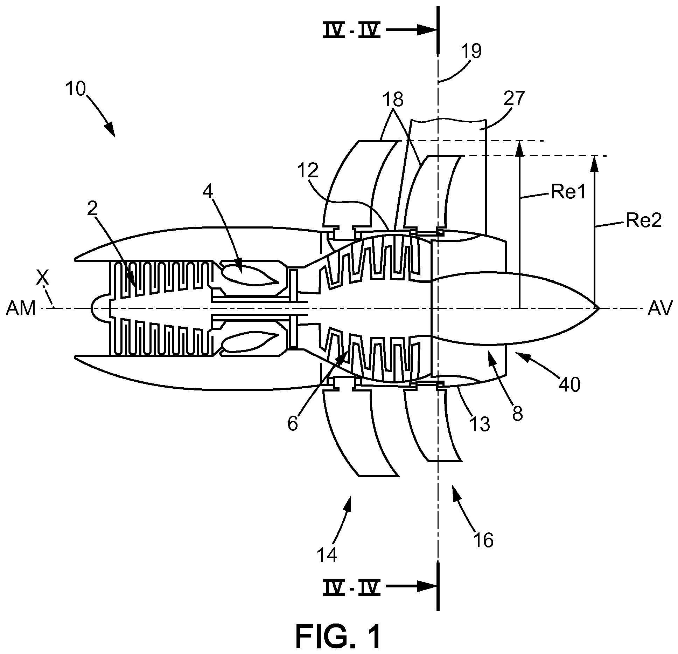

A titre d'exemple, un propulseur aéronautique compatible avec ce que propose l'invention pourra être une turbomachine, comme celle des figures 1 à 3.

Tout propulseur ici visé, comme la turbomachine, 10, comprend un moyeu 12 situé en amont (AM) d'un carter moteur 13. Une rangée rotorique amont 14, annulaire, de pales 18 non carénées est montée sur le moyeu 12 (autour de lui), et une rangée statorique aval 16, annulaire, de pales 18 non carénées est montée sur le carter moteur 13 (autour de lui). Les deux rangées sont espacées l'une de l'autre suivant un axe longitudinal X de la turbomachine 10.

Le moyeu 12 et le carter moteur 13 pourront être confondus sous le terme nacelle 40, la nacelle 40 étant la structure autour de laquelle sont disposées et s'étendent les pales 18 de rotor 14 et de stator 16. La nacelle 40 est elle-même fixée à l'aéronef que le propulseur aéronautique ici visé doit entraîner.

Comme on l'aura déjà compris, les qualificatifs d'orientation, tels que « longitudinal », « radial » ou « circonférentiel », sont définis par référence à l'axe longitudinal X du propulseur considéré, comme sur la turbomachine 10. La direction longitudinale correspond ici à la direction d'avancement du propulseur. En particulier, la direction longitudinale peut coïncider avec une direction horizontale, i.e. perpendiculaire au champ de pesanteur. Les qualificatifs relatifs « amont » (AM) et « aval » (AV) sont définis l'un par rapport à l'autre en référence à l'écoulement des gaz dans du propulseur, suivant la direction longitudinale. La position angulaire de chacune des pales 18 autour de l'axe longitudinal X est repérée par rapport à un cadran horaire (ici vu de l'amont par exemple) dont les positions angulaires à 12H, 3H, 6H et 9H sont positionnées de manière conventionnelle. La position angulaire à 12H est donc positionnée verticalement vers le haut par rapport à l'axe longitudinal X et la position angulaire à 6H est positionnée verticalement vers le bas par rapport à l'axe longitudinal X. La position angulaire à 3H est positionnée horizontalement vers la droite par rapport à l'axe longitudinal X et la position angulaire à 6H est positionnée horizontalement vers la gauche par rapport à l'axe longitudinal X. Un axe s'étendant radialement en passant par les positions angulaires à 12H et 6H est ainsi perpendiculaire à un axe s'étendant radialement en passant par les positions angulaires à 3H et 9H. Les qualificatifs de position absolue, tels que les termes « haut », « bas », « gauche », « droite », etc., ou de position relative, tels que les termes « dessus », « dessous », « supérieur », « inférieur », etc., et les qualificatifs d'orientation, tels que les termes « vertical » et « horizontal » font ici référence à l'orientation des figures et sont considérés dans un état opérationnel du propulseur, typiquement lorsque celle-ci est installée sur un aéronef posé au sol. Dans cet état de la turbomachine 10, l'axe passant par les positions angulaires à 12H et à 6H s'étend dans la direction du champ de pesanteur, soit verticalement. Il peut en revanche être déduit qu'un mouvement de roulis de l'aéronef en vol sur lequel est monté le propulseur sera de nature à provoquer une rotation des directions verticale et horizontale telles que considérées sur les figures autour de l'axe longitudinal X. De la même manière, un mouvement de roulis de l'aéronef en vol sur lequel est monté le propulseur sera de nature à provoquer une rotation de l'axe passant par les positions angulaires à 12H et 6H et de l'axe passant par les positions angulaires à 3H et 9H autour de l'axe longitudinal X. Une « zone latérale » de la turbomachine 10 fait référence à une zone qui est circonférentiellement au voisinage de la position angulaire à 3H ou de la position angulaire à 9H. De même, une « zone supérieure » et une « zone inférieure » du propulseur font références, respectivement, à une zone qui est circonférentiellement au voisinage de la position angulaire à 12H et à une zone qui est circonférentiellement au voisinage de la position angulaire à 6H.

Ainsi, la rangée statorique aval 16 (ou stator) est fixe autour de l'axe longitudinal X. Autrement dit, la rangée statorique aval 16 n'est pas entrainée en rotation autour de l'axe longitudinal X. Cela n'exclut pas que chaque pale 18 de la rangée statorique aval 16 peut être à calage variable.

Si le propulseur aéronautique considéré est (ou comprend) une turbomachine, celle-ci sera donc un moteur à turbine comprenant successivement, parallèlement à l'axe longitudinal (X), d'amont en aval à l'intérieur de la nacelle 40 (y compris sous le carter moteur 13) : - un (ou des) compresseur(s) 2,
- au moins une chambre de combustion 4,
- une (ou des) turbine(s) 6 entrainant le(s) compresseur(s), et
- au moins une tuyère d'échappement 8.

Parmi ces turbomachines à soufflante non carénée, on connait les turbomachines de type « Unducted Single (or Stator) Fan » (USF) dans chacune desquelles, comme illustré aux figures 1 à 3, la rangée rotorique amont 14 de pales 18 non carénées est montée mobile en rotation autour de l'axe longitudinal X et la rangée statorique aval 16 de pales 18 non carénées est fixe. Le sens de rotation des pales 18 de la rangée rotorique amont 14 (ou rotor) n'est pas déterminant.

La rangée statorique aval 16 peut être centrée sur un axe coïncidant ou non avec l'axe longitudinal X. Dans les exemples présentés, la rangée statorique aval 16 est centrée sur l'axe longitudinal X. Une telle configuration de la rangée rotorique amont 14 et de la rangée statorique aval 16 permet de valoriser, à travers la rangée statorique aval 16, l'énergie de giration de l'écoulement d'air issu de la rangée rotorique amont 14. Le rendement de la turbomachine 10 est ainsi amélioré, notamment vis-à-vis d'une hélice rotative unique (comme celle 14) dans le cas d'un turbopropulseur classique. La rangée rotorique amont 14 est entraînée en rotation autour de l'axe longitudinal X par la (ou les) turbine(s) 6 qui entraîne(nt) elle(s)-même(s) le(ou les) compresseur(s) 2. La turbomachine 10 comprend généralement un boitier de réduction de vitesse (« gearbox » en anglais) afin de découpler la vitesse de rotation des turbines 6 par rapport à la vitesse de rotation de la rangée rotorique amont 14. Par ailleurs, l'un des intérêts d'une turbomachine de type USF par rapport à une turbomachine type « Counter-Rotating Open Rotor » est de réduire le bruit tonal émis par la turbomachine du fait que la rangée statorique aval 16 de pales 18 non carénées est fixe.

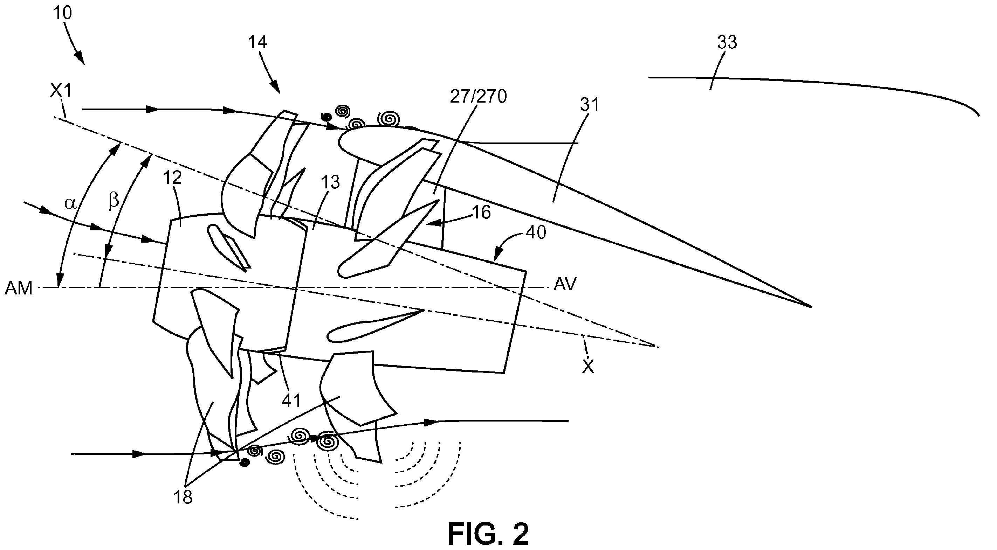

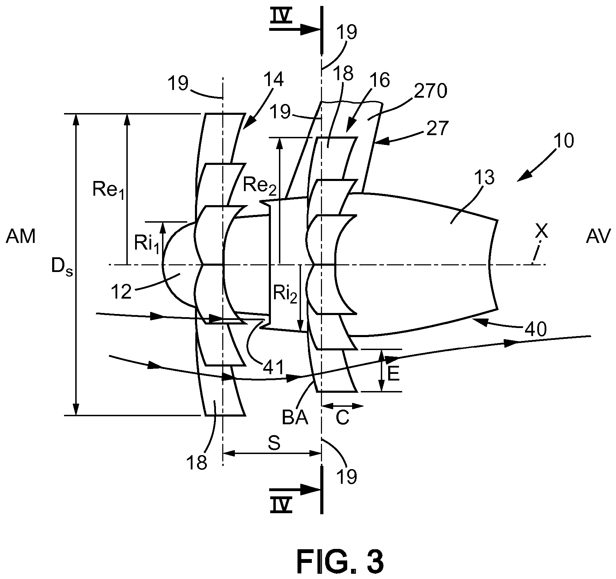

Comme schématisée aux figures 2 et 3, le propulseur peut avoir une configuration dite « puller » (rangée rotorique amont 14 et rangée statorique aval 16 situées au niveau d'une portion d'extrémité amont du propulseur) ou, comme schématisé à la figure 1, une configuration dite « pusher » (rangée rotorique amont 14 et rangée statorique aval 16 situées au niveau d'une portion d'extrémité aval du propulseur).

Dans la configuration puller, la rangée rotorique amont 14 et la rangée statorique aval 16 peuvent entourer une section du(des)compresseur(s) 2 de la turbomachine ou du boitier de réduction de vitesse. Dans la configuration pusher, la rangée rotorique amont 14 et la rangée statorique aval 16 peuvent entourer une section de la(des) turbine(s) 6 de la turbomachine 10.

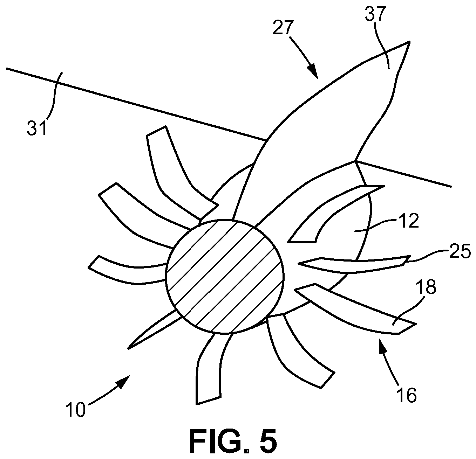

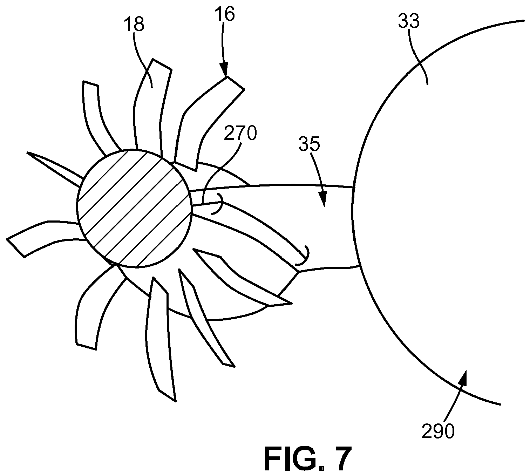

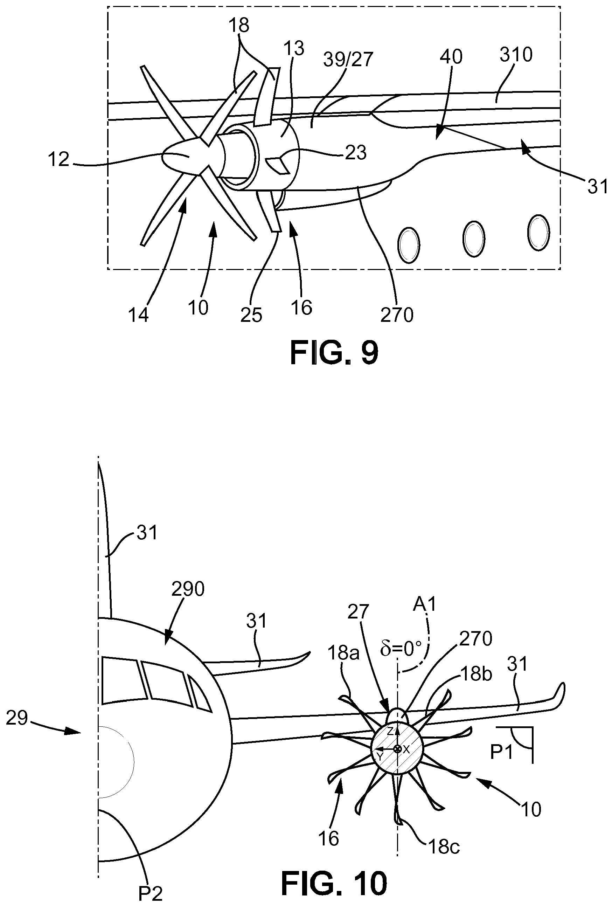

Indépendamment du type de propulseur (turbomachine, hybride...), un système de fixation 27 permettra de fixer le propulseur à l'aéronef 29 qui en est équipé, et plus précisément à sa voilure (aile) 31, ou à son fuselage 33, ou toute autre partie adaptée. Typiquement, on pourra pour cela utiliser :
- pour un fuselage : un mât 35 (comme dans les exemples de la figure 7), ou
- pour une fixation à une aile ou une voilure : un pylône 37 (comme dans les exemples des figures 5, 10, 13, 16) ou un berceau 39 (comme dans l'exemple de la figure 9). Les pales 18 de la rangée rotorique amont 14 et/ou de la rangée statorique aval 16 peuvent être à calage variable. Il est ainsi possible d'adapter le calage des pales 18 de la turbomachine 10 selon le point de fonctionnement du propulseur ou la phase de vol. Il peut être prévu un système de changement de calage 38 situé pour partie dans la nacelle 40 (moyeu 12 et/ou carter 13) afin d'adapter l'incidence des pales pour chaque phase de vol. Chaque pale 18 peut ainsi être ajustée en rotation autour d'un axe 19 de changement de calage respectif. L'axe 19 de changement de calage de chacune des pales 18 est un axe :
- s'étendant radialement et/ou positionné longitudinalement au niveau d'une portion médiane de la pale respective, et
- autour duquel l'angle de calage d'une pale peut être adapté.

La solution-ici présentée peut couvrir les cas où :
- l'axe de changement de calage est perpendiculaire à l'axe longitudinal X,
- l'axe de changement de calage n'est pas perpendiculaire à l'axe longitudinal X, c'est-à-dire qu'il est incliné ; Par exemple, si l'axe de changement de calage a une composante longitudinale et/ou une composante circonférentielle.

Chaque pale 18 de la rangée rotorique amont 14 et de la rangée statorique aval 16 s'étend selon une direction radiale depuis le moyeu 12 de sorte à définir une dimension radiale entre ledit moyeu 12 et une extrémité radialement externe de la pale 18 respective. En d'autres termes, la dimension radiale d'une pale 18 est mesurée entre une extrémité radialement interne 23 de la pale 18 et une extrémité radialement externe 25 de la pale 18. L'extrémité radialement interne de chaque pale 18 est située au niveau du moyeu 12 de la turbomachine 10. Chaque pale 18 peut notamment être fixée au moyeu 12 de la turbomachine 10 au niveau de l'extrémité radialement interne. L'extrémité radialement externe de chaque pale 18 est ici une extrémité libre (i.e. non-carénée). Il est précisé que l'envergure d'une pale 18 est en conséquence la distance radiale entre ses extrémités interne 23 et externe 25 (cf. figure 9).

On pourrait définir ici L1 comme la hauteur maximale des pales rotoriques et L2 comme la hauteur maximale des pales statoriques (que toutes les pales aient une hauteur identique ou qu'un clipping 360° existe ; cf. hauteur L21 par exemple figure 8).

Autrement dit :
- L1 = Re1-Ri1 pour une pale de la rangée rotorique amont, et
- L2 = Re2-Ri2 pour une pale de la rangée statorique aval.

En outre, chaque pale 18 de la rangée rotorique amont 14 et de la rangée statorique aval 16 présente un rayon radialement interne respectivement Ri1, Ri2 considéré comme la distance radiale à l'axe longitudinal X de l'extrémité radialement interne de la pale 18, par exemple située au niveau du (c'est-à-dire la plus proche du) moyeu 12 (rangée rotorique) ou du carter 13 (rangée statorique). L'extrémité radialement interne 23 est, dans la figure 3, à proximité de l'axe de changement de calage de la pale respective. L'extrémité radialement interne de chaque pale peut alternativement être à proximité du bord d'attaque en pied de pale. Un rayon radialement externe, tel que Re1 ou Re2 figure 3, de chaque pale 18 est considéré comme la distance radiale à l'axe longitudinal X de l'extrémité radialement externe de ladite pale 18, c'est-à-dire, comme le rayon maximal de la pale.

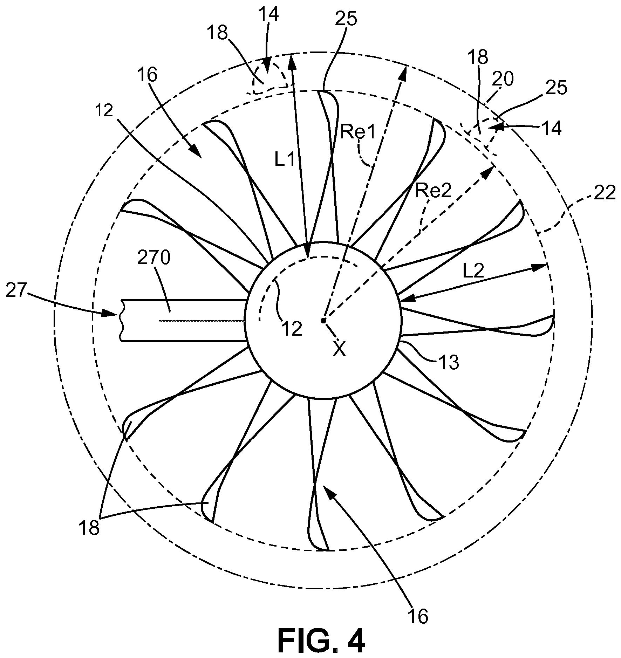

Comme on le comprend en regardant à titre d'exemple à la figure 4, où toutefois seule une petite partie d'une des pales rotoriques est représentée, l'extrémité radialement externe 25 des pales 18 de la rangée rotorique amont 14 et de la rangée statorique aval 16 sont inscrites, respectivement, dans une enveloppe externe 20 de la rangée rotorique amont 14 et une enveloppe externe 22 de la rangée statorique aval 16.

Une projection, dans le plan de coupe IV-IV (cf. figure 1 ou 3), de l'enveloppe externe 20 de la rangée statorique aval 16 peuvent définir un cercle de rayon Re2, ou encore de diamètre Ds, qui peut être centré sur l'axe longitudinal X (Ds = 2*Re2).

Le diamètre D ou cercle de rayon Re1, dans un plan de coupe radial au niveau de l'enveloppe externe 20 de la rangée rotorique amont **14,** peut représenter le diamètre externe du propulseur considéré, la turbomachine 10 dans l'exemple (cf. figure 1).

La dimension radiale de chaque pale 18 de la rangée statorique aval 16 peut être inférieure à la dimension radiale de chacune des pales 18 de la rangée rotorique amont 14 de manière à limiter l'impact des tourbillons formés au niveau de l'extrémité radialement externe des pales 18 de la rangée rotorique amont 14 avec les pales 18 de la rangée statorique aval 16. L'enveloppe externe 20 de la rangée rotorique amont 14 entourera alors l'enveloppe externe 22 de la rangée statorique aval 16 lorsque celles-ci sont projetées dans un plan de projection commun normal à l'axe longitudinal X, tel qu'ici le plan de coupe IV-IV.

La projection de l'enveloppe externe de la rangée statorique aval 16 dans un plan de projection commun normal à l'axe longitudinal X, tel que le plan de coupe IV-IV dans l'exemple, définit un cercle dont le centre peut être désaxé par rapport à l'axe longitudinal X, par exemple selon la direction de l'axe passant par les positions angulaires à 12H et à 6H. La distance radiale entre le centre de l'enveloppe externe 22 de la rangée statorique aval 16 en forme de cercle et l'axe longitudinal X peut être comprise entre 0,005 D et 0,2 D.

Le cercle/l'ovale défini par l'enveloppe externe 22 de la rangée statorique aval 16 pourra présenter un rayon (par exemple maximal si une forme ovale est concernée) Re2 inférieur au rayon (par exemple maximal si une forme ovale est concernée) Re1 de l'enveloppe externe 20 de la rangée rotorique amont 14.

Ainsi, la répartition hétérogène des pales 18 du stator aval 16 (dans la direction azimutale) est compatible avec d'autres technologies de réduction de bruit, tel que le «clippling 360°». Il est donc possible, sur au moins un secteur angulaire :
- de disposer de façon hétérogène (dans la direction circonférentielle) les pales 18 de stator aval 16, et
- que les pales 18 du stator aval 16 aient chacune, ou individuellement, un rayon maximal (Re2) ou hauteur inférieur(e) à un rayon maximal (Re1) ou hauteur des pales 18 du rotor amont 14.

Dans ce cas, on privilégiera favorablement des pales 18 de stator 16 plus courtes en partie basse (entre 4H et 8H) et sur les côtés (entre 2H et 4H ou entre 7H et 10H, vers l'extérieur et/ou vers le fuselage) afin de minimiser le bruit d'interaction lors des phases en incidence (atterrissage/décollage).

Disposer moins de dites pales de stator 16 que de dites pales du rotor amont 14 pourra également être utile, pour allier diminution du bruit, efficacité aérodynamique, chargement en efforts moindre de certaines pales du stator aval et limitation de poids et d'encombrement.

On préconise que : B ≥ V+1, ou de préférence B≥ V+2.

Conformément à un aspect important précité, il est donc ici intéressant d'avoir un espacement azimutal hétérogène des pales du stator aval 16, pour les raisons mentionnées : contraintes d'intégration, voire en outre raisons aérodynamiques et/ou acoustiques.

Plusieurs modes de réalisation sont envisageables en fonction de l'objectif ou du compromis multi-métier recherché.

Comme déjà indiqué, deux pales adjacentes, telles que 18a,18b, de la rangée statorique aval de pales statoriques 16 présentent entre elles, autour de l'axe longitudinal (X), un espacement azimutal (Δθᵢ) défini par l'angle entre des axes respectifs 180a,180b et/ou 19. Ces axes sont interchangeables dans les cas présentés et peuvent être intervertis, notamment sur les figures.

Ces axes respectifs sont des axes :
- soit d'adaptation d'un angle de calage (axe 19 précité) desdites deux pales adjacentes, lorsque ces axes sont projetés dans un plan perpendiculaire à l'axe longitudinal X et si lesdites deux pales adjacentes sont à angle de calage variable,
- soit radiaux à l'axe longitudinal X et/ou passant par les extrémités radialement internes 23 ou les extrémités radialement externes 25 (rayon max, Re2, comme par exemple sur la figure 3) ou par le centre de gravité desdites deux pales adjacentes, respectivement, si lesdites deux pales adjacentes sont à angle de calage fixe,
- soit :
   -- pour l'un desdits axes respectifs, d'adaptation d'un angle de calage de l'une desdites deux pales adjacentes (axe 19 précité), lorsque la pale, telle que 18a, est à angle de calage variable,
   -- l'autre étant radial à l'axe longitudinal X et/ou passant par l'extrémité radialement interne 23 ou par l'extrémité radialement externe 25 ou par le centre de gravité de ladite pale adjacente, telle que 18b, lorsque celle-ci est à angle de calage fixe.

Dans le cas où l'une des pales de stator est fixe (par exemple, pour des contraintes d'intégration, comme par exemple s'il manque d'espace sous le moyeu 12 et/ou le carter 13 pour intégrer le système de changement de calage ou pour réduire le poids), l'axe principal de la pale peut donc être défini par la ligne perpendiculaire à l'axe longitudinal X passant par le bord d'attaque (BA) au niveau de l'encastrement/pied de pale 23 ou passant par le centre de gravité de la pale ou en tête de pale (extrémité externe) 25 (rayon max, Re2). On revient sur cette situation en référence à un dit « deuxième cas », ci-après.

Ci-après, et de façon générale dans la présente divulgation, l'expression « axe de pale » correspondra indifféremment à l'un quelconque de ces trois cas.

Dans ce cadre, pour présenter la répartition hétérogène recherchée autour de l'axe longitudinal X, certaines au moins desdites pales 18 de la rangée statorique aval 16 sont ainsi disposées qu'il existe au moins deux dites pales adjacentes, telles que 18a,18b, de la rangée statorique aval 16 qui présentent entre elles un espacement azimutal Δθᵢ ou, tel que : ${Δθ}_{i} \neq 360 ° / V ;$ ${Δθ}_{i} \geq \left(360°/V\right) + 1 ° ou {Δθ}_{i} \leq \left(360°/V\right) - 1 ° ,$ avec V qui définit le nombre de pales 18 sur ladite rangée statorique aval 16 ; et/ou qu'il y a au moins deux espacements azimutaux entre les pales 18 de la rangée statorique aval 16 tel que Δθ et Δθⱼ sont distincts lorsque i#j avec i,j (entiers) = 1, 2, ... et i,j ≤ V.

Un écart d'au moins 1° sera ainsi, de préférence, nécessaire pour induire un effet significatif lié à l'espacement azimutal hétérogène. De préférence, l'écart sera même ≥ 3° ou encore de préférence ≥ 5°.

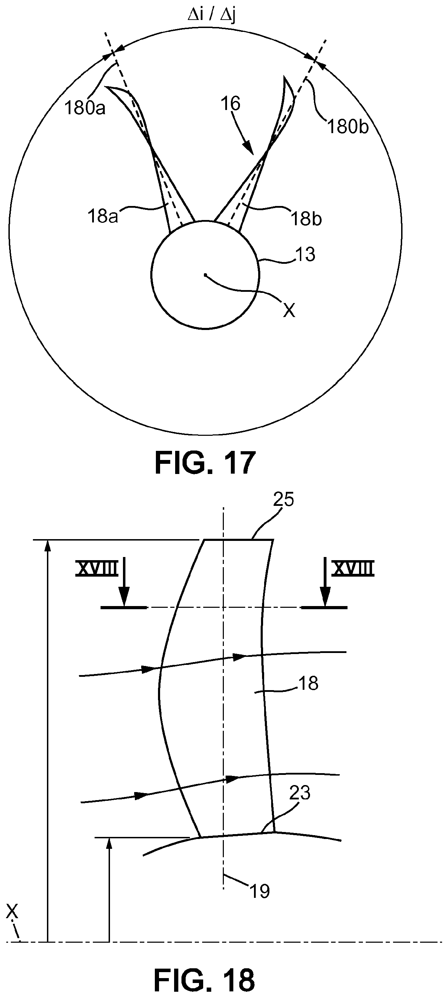

A titre d'exemple, la figure 17 schématise ce qu'est l'angle, ou « espacement azimutal » Δθᵢ ou Δθⱼ entre deux pales consécutives de stator, telles les pales 18a,18b d'axes radiaux respectifs 180a,180b. Il s'agit de l'angle le plus faible des deux, circonférentiellement, entre lesdits axes 180a,180b, ici autour de l'axe X.

De façon générique, et comme on le voit à titre donc d'exemple non limitatif sur la figure 3, lesdits espacements azimutaux sont définis chacun par la distance circonférentielle E entre deux pales consécutives, 18a,18b, laquelle distance varie en fonction de la position radiale et azimutale des pales 18 concernées, c'est-à-dire E=r*Δθ (ou Eᵢ=r*Δθᵢ). Ces espacements azimutaux peuvent donc être caractérisés par l'angle précité Δθᵢ, lorsque ces axes sont projetés dans un plan perpendiculaire à l'axe longitudinal, X, du propulseur aéronautique.

Chaque pale statorique aval 18 définit un profil aérodynamique. A cet effet, chaque pale statorique aval comprend un empilement de sections 30 selon la direction radiale. L'une des sections 30 est représentée à la figure 19. Chaque section 30 s'étend dans un plan de section respectif qui est perpendiculaire à la direction radiale d'extension de la pale statorique aval correspondante. Chaque section 30 comprend un bord d'attaque à l'amont et un bord de fuite à l'aval entre lesquels s'étendent une ligne d'intrados 330 et une ligne d'extrados 340. Chaque section 30 définit un profil aérodynamique. Chaque section 30 comprend aussi une corde C définie par une portion de droite reliant le bord d'attaque au bord de fuite.

Conventionnellement (voir par exemple figures 18-19), l'angle de calage γ de chaque pale statorique aval 18 correspond à l'angle formé entre, d'une part, un premier axe A1 qui est défini par l'intersection entre le plan de section d'une section 30 de référence parmi l'empilement de sections 30 de la pale statorique aval et un plan perpendiculaire à l'axe longitudinal X qui peut comprendre l'axe de calage 19 (lequel peut donc exister ou non pour tous les cas exposés dans le présent texte) de la/chaque pale statorique aval considérée (quand l'axe de changement de calage est perpendiculaire à l'axe X, ce qui normalement le cas, mais pas obligatoire), et d'autre part, la corde C de la section 30 de référence de la pale statorique aval 16. L'angle de calage γ est mesuré du côté amont du plan perpendiculaire à l'axe longitudinal X qui comprend l'axe de calage 19 de la pale statorique aval 18 L'angle de calage γ est mesuré positivement selon un sens allant du premier axe A1 à la corde C de la section 30 de référence, et plus particulièrement dans un sens coïncidant avec le sens allant de la ligne d'intrados 330 vers la ligne d'extrados 340.

La section 30 de référence de chaque pale statorique aval 18 peut être située, sur la pale statorique aval 16 correspondante, à une distance radiale à l'axe longitudinal X qui correspond à 75% du rayon radialement externe de la pale statorique aval.

Comme on l'a déjà noté, une problématique que traite la présente divulgation est liée aux contraintes d'intégration, sur la répartition azimutale hétérogène des pales du stator aval 16, d'un propulseur aéronautique tel que génériquement présenté ci-avant, en présence donc d'une dite structure 27 de fixation du propulseur à l'aéronef 29, voire en particulier d'une dite proéminence.

Comme schématisé à titre d'exemple(s) sur différentes figures, cette (chaque) proéminence, 270, peut-être la structure 27 en elle-même de fixation du propulseur aéronautique à l'aéronef, ou une sorte de relief, comme une excroissance :
- sur la structure de fixation 27 et/ou
- sur la nacelle 40 ; ce peut en particulier être une proéminence à l'interface entre le carter 13 et la structure de fixation 27 à laquelle la proéminence 270 est alors en partie intégrée.

Ainsi, qui s'étend entre deux pales 18 de ladite rangée statorique aval 16, ou de façon axialement adjacente à elles, la structure de fixation 27 présente-elle (voir par exemple figures 3 ou 5) ou définit-elle (voir par exemple figures 1,2) la proéminence 270, vu dans un plan (P1) perpendiculaire audit axe longitudinal (X). La proéminence 270 peut, par exemple, être nécessaire pour caréner une partie du système de calage variable 38 des pales 18 concernées, ou des conduites de passage de lubrifiant, ou pour caréner une partie de la structure de fixation elle-même.

Le plan P1 est le plan de coupe/plan IV-IV sur les figures 1 et 3 ; Par exemple, P1 peut être un plan perpendiculaire à l'axe longitudinal X et :
- soit intersectant au moins (partiellement) l'une des pales de stator circonférentiellement adjacentes à la structure de fixation,
- soit contenant au moins l'un (ou des) des axes des pales (18a et/ou 18b).

Dans une « solution berceau » (utilisation d'un berceau 39), on peut définir la proéminence 270 dans le plan P1, tel que défini dans le commentaire ci-dessous, à mi-distance entre les axes de pales sur les côtés de la proéminence, c'est-à-dire, dans le plan P1 à mi-distance entre les axes 18a et 18b.

La nacelle 40, en particulier le carter 13, est fixé avec la structure de fixation 27.

Ainsi, en présence notamment d'un pylône 37, berceau 39 ou mât 35, il sera alors utile de réserver un espacement azimutal augmenté entre les deux pales du stator aval 16, d'un côté et de l'autre de la structure de fixation 27 et/ou de la proéminence 270.

En pratique, dans toute situation prenant en compte, comme dans la présente divulgation, l'exigence d'intégration à l'aéronef de la structure de fixation 27 choisie, l'espacement azimutal Δθᵢ (i = 1 à V) entre lesdites deux pales adjacentes (telles que 18a,18b), quand elles sont situées de part et d'autre de la structure de fixation 27 et/ou de ladite proéminence 270, dans un plan perpendiculaire à l'axe longitudinal (X), sera donc entre 1° et 75° supérieur, de préférence entre 5° et 40° supérieur, ou encore de préférence entre 8° et 20° supérieur au plus petit espacement azimutal Δθᵢ existant sur ladite rangée statorique aval 16 de pales statoriques.

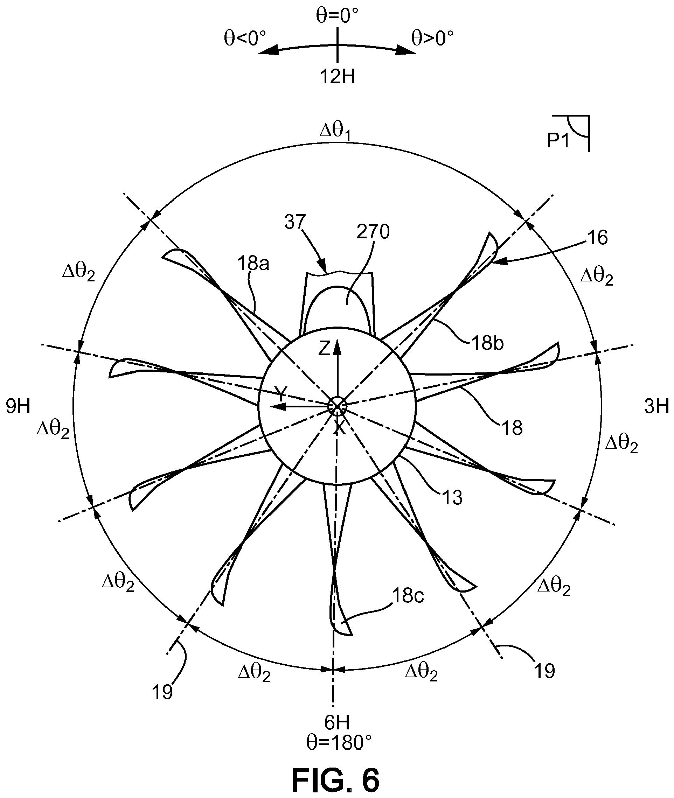

Cela permettra notamment de proposer un cas de réalisation où l'espacement azimutal Δθᵢ :
- de tous les axes 19 de changement de calage et/ou
- de tous les axes précités, tels que 18a,18b, radiaux à l'axe longitudinal X si lesdites deux pales adjacentes sont à angle de calage fixe,
est homogène à l'exception, comme illustré par d'exemple sur les figures 6 et 8, d'un secteur angulaire qui fait face à la structure de fixation 27 et/ou à la proéminence 270.

On aura compris que « répartition homogène » a pour sens : Δθᵢ = 360°/V, pour tout espacement azimutal entre deux pales, (circonférentiellement) adjacentes/successives, concernées. Ce secteur angulaire sera alors favorablement limité entre 20° et 50°. Il s'agit de l'angle entre deux pales adjacentes en cas d'une répartition homogène. Cet angle serait limité par le nombre de pales de préférence envisagé, par exemple V variant entre 8 et 16, ce qui correspond à un secteur angulaire entre 22,5° et 45°, de préférence.

Trois exemples d'une telle situation sont représentés figures 5 à 9.

Ainsi voit-on figures 5, 6 une situation d'intégration d'un pylône ou mât au niveau de la grille de stator 16, dans une installation sous-aile (aile 31). On pourrait considérer qu'il s'agit :
- figure 5, d'un pylône 37,
- figure 6, de la vue de face (de l'amont) de la grille de pales 18 du stator aval 16 (coupe axiale), sous une aile d'aéronef, via un pylône 37.

Figures 7, 8, il s'agit plutôt d'une situation d'intégration pylône ou mât au niveau de la grille de stator 16, dans une installation latérale sur un côté du fuselage 33. On pourrait considérer qu'il s'agit :
- figure 7, d'un mât 35,
- figure 8, de la vue de face (de l'amont) de la grille de pales 18 du stator aval 16 (coupe axiale), fixé latéralement à un fuselage d'aéronef, via un mât 35.

A noter aussi notamment figures 6, 7 et 8, le cas où tous les couples de pales adjacentes de la rangée statorique aval 16 présentent entre eux un dit espacement azimutal identique, Δθ₂, sauf le couple des deux pales adjacentes 18a,18b (espacement azimutal Δθ₁) de la série de pales de ladite rangée statorique aval 16 situées respectivement de part et d'autre de la proéminence 270 et/ou la structure de fixation 27. Dans le cas retenu, Δθ₁ > Δθ₂, que la structure de fixation 27 et/ou la proéminence 270 soi(en)t à, ou vers, 12H (δ=0° ou δ≠0°) ou autre, et notamment située latéralement, à ou vers 3H ou 9H (δ=0° ou δ≠0°).

Figure 9, il s'agit d'une situation d'intégration d'un berceau 39 au niveau de la grille de stator 16, dans une installation latérale juste en amont du bord d'attaque 310 d'une aile 31 ou sous une aile (configuration dite « high wing » en anglais) ; dans l'exemple légèrement en contrebas d'une aile.

Une intégration en berceau 39 a ceci de particulier qu'elle correspond à une structure (plutôt, souvent) tubulaire qui se met autour du propulseur aéronautique ; Une proéminence 270 peut y prendre la forme d'une ou plusieurs excroissance(s) plutôt tubulaire(s).

Dans un certain mode de réalisation, on privilège qu'au moins l'une des pales du stator aval 16 soit située aux alentours de 180° (par exemple à 6H), soit entre 4H et 8H. Cela pourrait permettre l'intégration de certains sous-systèmes à cette position « basse », tels que le circuit de récupération de l'huile qui bénéficiera alors d'un effet « gravité ».

D'autres cas de figures peuvent se présenter, en liaison avec des pales de stator aval 16 - et donc de pales 18 d'un couple comme ci-avant présenté de rotor amont 14 et stator aval 16 - installées en contrebas d'une aile 31 (typiquement en sous-aile ou sous-voilure). En fonction du choix d'installation du propulseur aéronautique dans l'aéronef, le pylône 37 ou le berceau 39 peut être aligné avec la position 12H et/ou θ=0°, comme illustré sur la figure 10. Dans ce cas-là δ=0°, où δ correspond à l'écart angulaire entre l'axe de pale (dans l'exemple 18c) qui passe par 12H et 6H et l'axe de référence de la structure de fixation 27 (pylône 37 ou berceau 39) pour une installation sous-aile 31.

L'axe de référence de la structure de fixation 27 considérée - le pylône 37 dans l'exemple ci-dessus - et/ou de sa proéminence 270 est l'axe, tel que 18a,18b ou 19, suivant lequel la structure de fixation ou la proéminence s'étend et de part et d'autre duquel existe la situation où Δθᵢ≥ (360°/V) +1°, et de préférence (360°/V) +2°≤ Δθᵢ ≤ (360°/V)+45°, et encore de préférence (360°/V)+5°≤ Δθᵢ ≤ (360°/V)+25°.

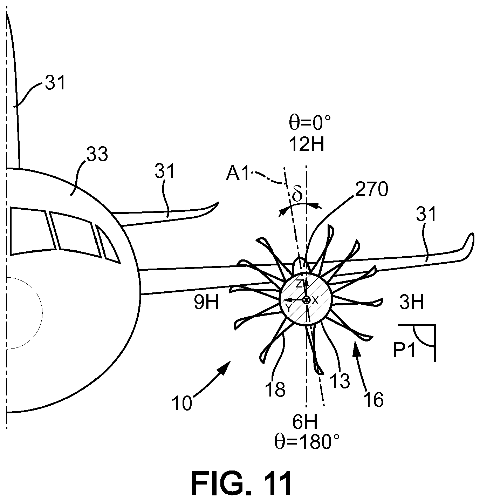

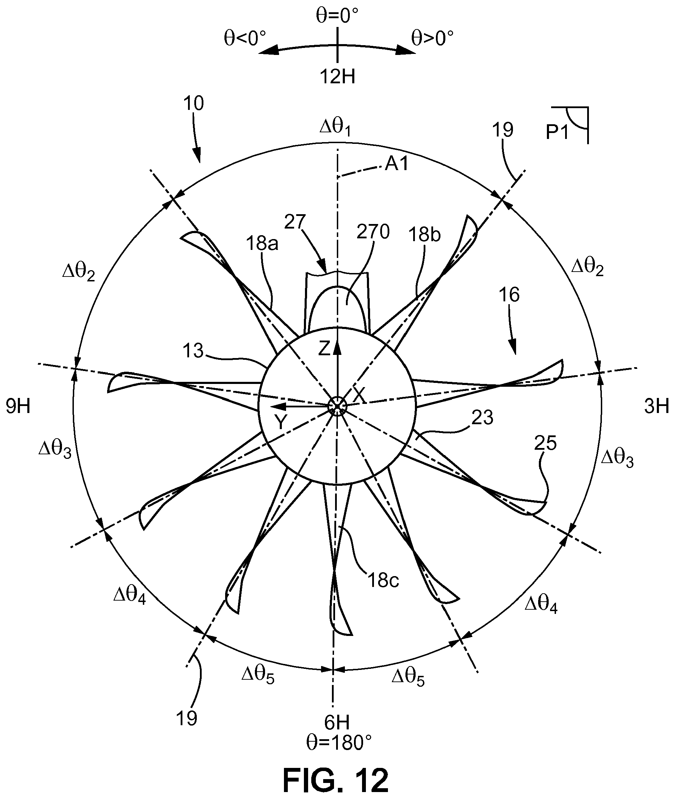

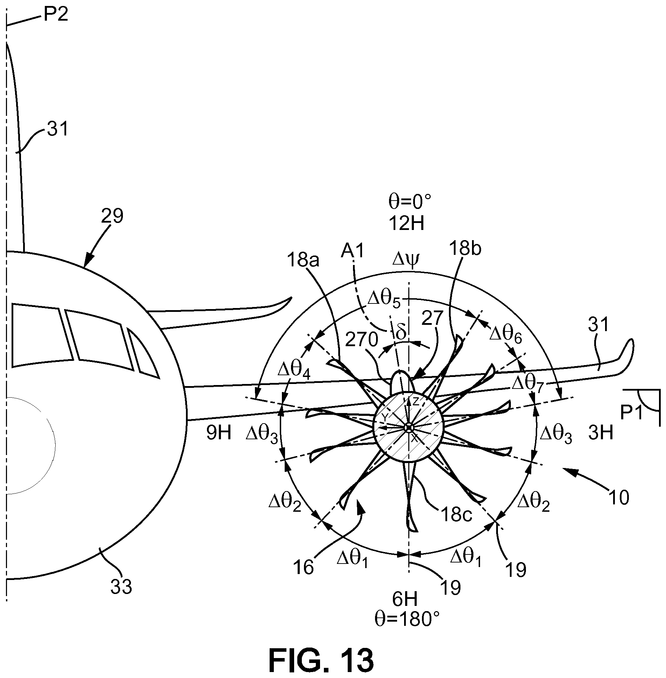

Dans une situation d'installation du propulseur aéronautique via donc un pylône 37 ou un berceau 39, pour une installation sous-aile 31, la proéminence 270 - et/ou la structure de fixation 27 - s'étend suivant une direction (A1) verticale ou formant, par rapport à la verticale et autour de l'axe longitudinal (X), un dit angle δ tel que :
δ=0° (comme par exemple figure 10 ou 12) ou
δ non nul, avec 1°≤ δ ≤ 30°, de préférence 1°≤ δ ≤ 15° (comme par exemple figure 11 ou 13).

Ce mode de réalisation peut en particulier correspondre à celui de pylônes 37 sur des turbomachines aéronautiques (dites « turbofans ») à double flux, équipées donc d'une soufflante.

Le cas où, en référence est la direction A1, le pylône 37 ou le berceau 39 s'élève en étant incliné d'un dit angle δ≠0° (1°≤ δ ≤ 30°, de préférence 1°≤ δ ≤ 15°) par rapport donc à l'axe 12H-6H, on pourra augmenter la garde au sol, c'est-à-dire la distance entre le sol et les extrémités radialement externes 25 des pales 18 les plus proches du sol, ce qui simplifie l'intégration sur l'avion. Par exemple, cela peut être intéressant lorsqu'on souhaite intégrer le propulseur aéronautique sous une aile d'aéronef mais on ne souhaite pas augmenter la hauteur de l'aile par rapport au sol.

Dans d'autre cas, l'angle δ peut être défini par rapport à une direction (A2) qui passe par 3H et 9H lorsque le propulseur aéronautique est installé sur un fuselage 33 et si δ=0° (sinon voir remarques relatives à δ≠0°), comme par exemple vers l'arrière du fuselage (voir exemple figure 7 8 ou 15, ou tout autre cas où la structure de fixation 27 serait orientée en conséquence).

On notera dans ce cas une intégration d'un pylône/mât au niveau de la grille de stators 16, avec prise en compte des contraintes d'intégration autour du pylône ou mât.

Quelle que soit la solution retenue, référentiel suivant la direction A1 ou A2 et δ=0° ou δ≠0°, on préservera toutefois utilement :
- des pales du stator aval 16 positionnées azimutalement, autour donc de l'axe longitudinal (X), de manière symétrique par rapport à l'axe A1 ou A2, perpendiculaire à l'axe longitudinal (X) et qui passe donc par la structure de fixation 27 et/ou la proéminence 270, et même favorablement, pour allier contrainte d'intégration, limiter des éventuels écarts dans le bruit émis par les pales 18 statoriques situées de part et d'autre de la proéminence 270, mieux repartir les charges sur les pales 18 statoriques en vol sans incidence et/ou simplifier la conception de la rangée de pales 18 du stator aval 16.
- comme espacement azimutal Δθᵢ le plus grand entre deux pales 18 adjacentes parmi toutes les pales 18 du stator aval 16, celui situé autour de la position azimutale de la proéminence 270 (et/ou donc la structure de fixation 27, et par conséquent du pylône 37 ou du berceau 39 ou mât 35, suivant le cas).

A titre complémentaire, les cas spécifiques suivants (qui pourront être combinés, lorsque cela est possible, voire être associés à ce qui précède) pourront en outre être privilégiés, pour les raisons expliquées.

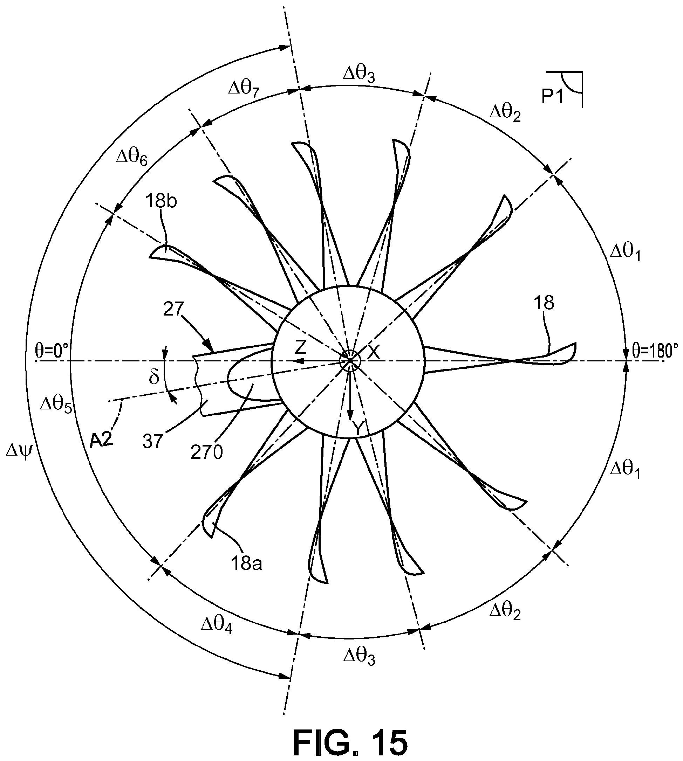

Premier cas, dont un exemple est schématisé figure 12 :
- la proéminence 270 (et/ou la structure de fixation 27) s'élève suivant une dite direction A1 verticale ou formant donc, par rapport à la verticale et autour de l'axe longitudinal X, ledit angle δ, tel que 1°≤ δ ≤ 30°, de préférence 1°≤ δ ≤ 15° (cas non illustré figure 12, mais que l'on peut construire aisément en ayant noté l'angle δ sur la figure 13 ou 15, par exemple), et
- les pales 18 du stator aval 16 présentent au moins trois espacements azimutaux (Δθᵢ) différents, les deux plus importants angulairement étant situés entre les deux pales adjacentes (telles que 18a, 18b) disposées de part et d'autre de la proéminence 270 (et/ou de la structure de fixation 27) et entre les positions angulaires à 2H et 4H et/ou à 8H et 10H, le plus faible angulairement étant situé entre lesdites pales 18 du stator aval 16 disposées entre les positions angulaires à 4H et 8H.

Ceci permet de réduire le nombre de pales en partie haute (vers 12H) pour permettre l'intégration d'un système de fixation 27, ainsi que sur les côtés, c'est-à-dire autour des positions azimutales à 3H et à 9H. Limiter le nombre de pales sur les côtés permet de modifier la directivité du son qui est rayonné vers le sol. Cela est particulièrement performant en mode USF avec pylône 37 ou berceau 39, sous aile. Toutefois, un inconvénient de ce mode de réalisation est d'avoir plus de pales concentrées vers 6H et donc, de ne pas pouvoir agir sur le bruit dirigé vers le fuselage 33.

D'un point de vue aérodynamique, avoir plus de pales 18 de stator aval 16 à l'amont du bord d'attaque de l'aile 31 (autour des positions azimutales à 2H et 4H et/ou 8H et 10H) permet de filtrer la remontée de pression qui sera perçue par les pales 18 du rotor amont 14.

Les espacements azimutaux entre deux pales adjacentes peuvent diminuer de manière (strictement) monotone de la position azimutale à 12H vers la position azimutale à 6H, avec pour avantage une réduction attendue des perturbations aérodynamiques et en particulier de l'interaction des sillages des pales 18 du stator avec le support du propulseur et sa proéminence.

Deuxième cas, dont un exemple est illustré figure 13 :
- la proéminence 270 (et/ou la structure de fixation 27) s'élève suivant une dite direction A1 verticale ou formant donc, par rapport à la verticale et autour de l'axe longitudinal X, ledit angle δ, tel que 1°≤ δ ≤ 30°, de préférence 1°≤ δ ≤ 15°, et
- les pales 18 du stator aval 16 présentent au moins trois espacements azimutaux (Δθᵢ) différents, les deux plus importants angulairement étant situés entre les deux pales adjacentes (telles que 18a, 18b) disposées de part et d'autre de la proéminence 270 (et/ou de la structure de fixation 27) et entre les positions angulaires à 4H et 8H, le plus faible angulairement étant situé entre les pales 18 du stator aval 16 disposées entre les positions angulaires à 2H et 4H et/ou à 8H et 10H.

Dans ce cas, la répartition azimutale des pales de stator entre les turbomachines à droite et à gauche peut être symétrique par rapport au plan de symétrie de l'aéronef (avion) / du fuselage, sur un secteur angulaire 360°-Δψ >180°. Cela permet de mieux équilibrer les charges et le poids sur les pales de stator ainsi que sur l'aéronef. Par ailleurs, ceci permet de réduire le nombre de pales en partie haute (vers 12H) pour permettre l'intégration d'un système de fixation, ainsi qu'en partie basse, c'est-à-dire autour de la position azimutale à 6H. Limiter le nombre de pales en partie basse permet de modifier la directivité du son qui est rayonné vers le fuselage 33. Cela est particulièrement performant en mode USF avec pylône 37 ou berceau 39, sous aile. Toutefois, un inconvénient de ce mode de réalisation est d'avoir plus de pales concentrées vers les côtés (autour de 3H et 9H) et donc, de ne pas pouvoir agir sur le bruit généré par les pales sur les côtés et dirigé vers le sol.

Troisième cas, dont un exemple est schématisé figure 14 :
- la proéminence 270 (et/ou la structure de fixation 27) s'étend suivant ladite direction A2 horizontale ou formant, par rapport à l'horizontale et autour de l'axe longitudinal (X), un angle (δ) tel que 1°≤ δ ≤ 30°, de préférence 1°≤ δ ≤ 15° (même remarque que pour la figure 12 concernant l'illustration de ceci), et
- une dite pale 18 du stator aval 16 s'étend suivant la position angulaire à 3H, ou suivant l'angle δ (si δ≠0), d'un côté ou de l'autre de la position angulaire à 3H ou à 9H.

Cela permet d'intégrer la proéminence au niveau d'un mât 35 lorsque le propulseur aéronautique est installé en arrière et attaché au fuselage par un mât 35. L'angle δ permet ici de mieux intégrer le propulseur aéronautique en réduisant les hétérogénéités dans l'écoulement incidence qui sont perçues par les pales de rotor. Par exemple, cela permet de limiter l'effet de l'incidence/angle de l'écoulement à l'aval de la voilure lorsque le propulseur est installé en arrière du fuselage.

Quatrième cas, dont un exemple est aussi illustré figure 14 :
- la proéminence 270 (et/ou la structure de fixation 27) s'étend suivant ladite direction A2 horizontale ou formant, par rapport à l'horizontale et autour de l'axe longitudinal (X), un angle (δ) tel que 1°≤ δ ≤ 30°, de préférence 1°≤ δ ≤ 15° (même remarque que pour la figure 12 concernant l'illustration de ceci), et
- les pales 18 (considérées toutes ensemble) du stator aval 16 présentent au moins trois espacements azimutaux (Δθᵢ) différents, les deux plus importants angulairement étant situés entre les deux pales adjacentes (telles que 18a,18b) disposées de part et d'autre de la proéminence 270 (et/ou de la structure de fixation 27) et entre les positions angulaires à 4H et 8H et/ou à 10H et 2H, le plus faible angulairement étant situé entre lesdites pales 18 du stator aval 16 disposées entre les positions angulaires à 2H et 4H.

Cela permet de modifier la directivité du son émis par les pales 18 du stator aval 16, de manière à limiter le bruit rayonné vers le fuselage 33 lorsqu'on installe le propulseur aéronautique vers l'arrière du fuselage, par exemple avec un mât 35.

Cinquième cas, dont un exemple est illustré figure 15 :
- la proéminence 270 (et/ou la structure de fixation 27) s'étend suivant ladite direction A2 horizontale ou formant, par rapport à l'horizontale et autour de l'axe longitudinal (X), un angle (δ) tel que 1°≤ δ ≤ 30°, de préférence 1°≤ δ ≤ 15°, et
- les pales 18 (considérées toutes ensemble) du stator aval 16 présentent au moins trois espacements azimutaux (Δθᵢ) différents, les deux plus importants angulairement étant situés entre les deux pales adjacentes (telles que 18a,18b) disposées de part et d'autre de la proéminence 270 (et/ou de la structure de fixation 27) et entre les positions angulaires à 1H30 et 4H30, le plus faible angulairement étant situé entre les pales (18) disposées entre les positions angulaires à 10H30 et 1H30 et/ou à 4H30 et 7H30.

Cela permet de modifier la directivité du son émis par les pales 18 du stator aval 16, de manière à limiter le bruit rayonné vers le sol (par exemple au voisinage des aéroports) lorsqu'on installe le propulseur aéronautique vers l'arrière du fuselage, par exemple avec un mât 35.

Sixième cas, dont un exemple est aussi illustré figure 15 :
- la proéminence 270 (et/ou la structure de fixation 27) s'étend suivant ladite direction A2 horizontale ou formant, par rapport à l'horizontale et autour de l'axe longitudinal (X), un angle (δ) tel que 1°≤ δ ≤ 30°, de préférence 1°≤ δ ≤ 15°, et
- les pales 18 (considérées toutes ensemble) du stator aval 16 sont réparties, autour de l'axe longitudinal (X), symétriquement ou de manière homogène, par rapport aux positions angulaires à 3H-9H sur un secteur angulaire tel que : 360°- Δψ > 180°.

Dans certains modes de réalisation, comme celui de la figure 15, tous les espacements azimutaux Δθᵢ compris dans Δψ sont différents.

Septième cas, en quelque sorte complémentaire du précédent, dont un exemple est illustré figure 13 :
- la proéminence 270 (et/ou la structure de fixation 27) s'élève suivant une dite direction A1 verticale ou formant donc, par rapport à la verticale et autour de l'axe longitudinal X, ledit angle δ, tel que 1°≤ δ ≤ 30°, de préférence 1°≤ δ ≤ 15°, et
- les pales 18 du stator aval 16 sont réparties, autour de l'axe longitudinal (X), symétriquement ou de manière homogène, par rapport aux positions angulaires à 12H-6H sur un secteur angulaire tel que : 360°- Δψ > 180°.

Lorsque les espacements azimutaux sont identiques, les stators à concevoir peuvent être identiques. Cependant, lorsqu'on a un nombre important d'espacements azimutaux différents, cela suggère qu'on a plus de familles de pales de stator avec des propriétés géométriques (corde C, cambrure, épaisseur e, ...) différentes. Par exemple, augmenter l'espacement E entre les pales diminue la solidité, C/E, des pales. Pour garder une solidité relativement constante, on devrait augmenter la corde des pales où l'espacement augmente. On doit donc essayer de limiter le nombre d'espacements différents, ce qui réduit le nombre de pales de stator aval différentes à concevoir et fabriquer, ce qui permet de réduire les coûts.

Encore à ce sujet, dans le sous-cas spécifique où, en référence donc à la direction A1, ledit angle δ est tel que 1°≤ δ ≤ 30°, de préférence 1°≤ δ ≤ 15° (comme par exemple sur la figure 13), on pourra utilement prévoir que, dans ce secteur angulaire 360°- Δψ > 180°, il y a au moins deux espacements azimutaux Δθᵢ identiques : Dans l'exemple de la figure 13, il y a deux Δθ₁, deux Δθ₂ et deux Δθ₃ dans ce secteur angulaire.

Et, prévoir que tous lesdits espacements azimutaux Δθᵢ soient différents dans ledit secteur angulaire complémentaire, Δψ, comme par exemple là encore dans le cas de la figure 13 où Δθ₄≠Δθ₅≠Δθ₆≠Δθ₇ dans le secteur angulaire Δψ, permettra de mieux adapter le fonctionnement aérodynamique des pales 18 du stator aval 16. Par exemple, cela permettrait d'adapter les positions azimutales des pales 18 du stator aval 16 pour que l'écoulement puisse mieux contourner (et limiter les pertes aérodynamiques au niveau de) la structure de fixation 27 et/ou la proéminence 270, ainsi que pour réduire l'interaction des sillages des pales 18 du stator aval 16 avec l'aile 31, le mât 35, et/ou d'autres éléments de l'aéronef à proximité (becs, volets, ...).

Huitième cas, dont un exemple peut de nouveau être celui illustré figure 13 :
- la proéminence 270 (et/ou la structure de fixation 27) s'élève suivant une dite direction A1 verticale ou formant donc, par rapport à la verticale et autour de l'axe longitudinal X, ledit angle δ, tel que 1°≤ δ ≤ 30°, de préférence 1°≤ δ ≤ 15°, et
- toutes les pales du stator aval 16, dans ledit secteur angulaire Δψ, présentent un dit espacement azimutal Δθᵢ hétérogène.

Par exemple, cela permettrait d'adapter les positions azimutales des pales 18 du stator aval 16 pour que l'écoulement puisse mieux contourner la structure de fixation 27 et/ou la proéminence 270, ainsi que de réduire l'interaction des sillages des pales 18 du stator aval 16 avec l'aile 31, le mât 35, ou d'autres éléments de l'aéronef à proximité (becs, volets, ...).

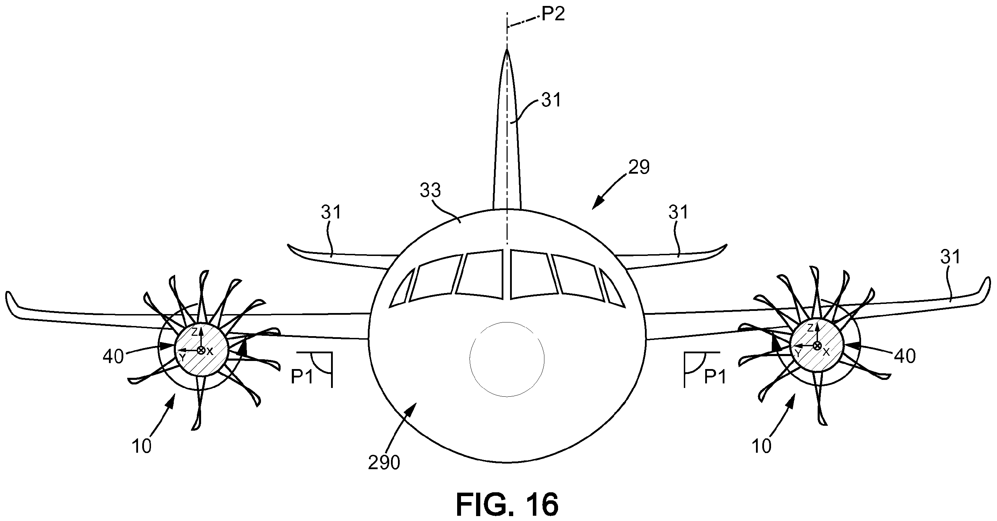

Neuvième cas, dont un exemple est illustré figure 16 (mais la répartition azimutale des pales des stators aval 16 peut être celle de l'un de cas ci-avant présenté, en référence si nécessaire aux figures 5, 6, 10 à 13) avec :
- il s'agit d'un aéronef 29 comprenant un nombre paire de dits propulseurs aéronautiques 10 (donc à pales d'un rotor amont 14, non carénées, et pales d'un stator aval 16, également non carénées),
- la structure 290 de l'aéronef (son bâti) comprend un fuselage 33,
- le fuselage 33 présente un plan de symétrie (P2) qui passe par l'axe longitudinal de l'aéronef (X1) et qui est parallèle à des plans passant par les positions angulaires à 6H et 12H de chaque propulseur aéronautique 10,
- ledit nombre paire de propulseurs aéronautiques 10 inclut un couple, aligné perpendiculairement au plan de symétrie (P2), de rangées annulaires amont de pales rotoriques 14 de deux desdits propulseurs aéronautiques 10, comme dans les cas par exemple des figures 1 à 3,
- les pales rotoriques de ce couple de rangées annulaires amont de pales des rotors amont 14, situées de part et d'autre du fuselage 33, tournent dans des sens opposés, et
- la répartition azimutale des pales des rangées annulaires aval de pales des stators aval 16, entre lesdits deux propulseurs aéronautiques 10, est symétrique par rapport audit plan (P2) de symétrie.

Les pales 18 des rotors amont 14 sur le côté droit et gauche du fuselage 33 tournent dans le sens opposé.

La répartition de la rangée des pales de stator entre les propulseurs à droite et à gauche du fuselage est alors symétrique par rapport au plan P2 de symétrie de l'aéronef / du fuselage ; et cela permet de mieux équilibrer les charges sur les pales de stator ainsi que sur l'aéronef. En effet, lorsque les pales rotoriques tournent dans des sens opposés, les pales rotoriques ascendantes et descendantes de chaque propulseur aéronautique peuvent être situées de manière symétrique (ou à une distance similaire) par rapport au plan P2 de l'aéronef.

Indépendamment de la nacelle, c'est-à-dire juste dès lors que le propulseur comprend une turbomachine 10 (à turbine à gaz) comportant :
- un moyeu 12 pourvu d'une rangée rotorique amont 14, et
- un carter moteur 13 pourvu d'une rangée statorique aval 16 situé(es) en aval (AV) d'une rangée rotorique amont 14,

une entrée d'air - telle que 41 - amenant de l'air vers le(s) compresseur(s) sera utilement située :
   -- à l'aval de la rangée rotorique amont 14 de pales rotoriques, et
   -- en amont de la rangée statorique aval 16 de pales statoriques,
autrement dit, longitudinalement le long du le propulseur, entre les pales rotoriques et les pales statoriques.

Comme on l'a compris une telle turbomachine pourra alors comprendre successivement, le long de l'axe longitudinal (X), d'amont vers l'aval :
- au moins un compresseur 2,
- au moins une chambre de combustion 6,
- au moins une turbine 4 entrainant le(s) compresseur(s), et
- ladite entrée d'air 41.

Cela a pour conséquence que la dimension radiale des pales 18 de la rangée annulaire aval 16 pourrait être encore plus réduite afin d'échapper aux tourbillons formés au bout des pales 18 de la rangée annulaire amont 14, ce qui diminue le rendement de la turbomachine 10.

Encore un autre cas est traité ci-après quand, comme dans l'exemple de la figure 20, il existe un plan (P1) perpendiculaire audit axe longitudinal (X) et intersectant au moins l'une des pales 18 du stator aval 16 dans lequel le rapport entre la hauteur K (suivant la verticale du lieu) de la proéminence 270 et la hauteur d'au moins l'une des pales statoriques (telles que 18a, 18b) d'un côté ou de l'autre de la proéminence 270 est tel que 0,02 ≤ K/L2 ≤0,9, ou de préférence 0,04 ≤ K/L2 ≤0,4.

Ceci permet de caractériser la taille de la proéminence dans le plan P1 par rapport à la hauteur des pales de stator adjacentes.

Dans le cas de figure considéré, K correspond à la distance entre Ri2 (tel que défini ci-avant), le rayon radialement interne de la pale statorique concernée (ou rayon du moyeu/carter) et l'extrémité radialement externe de la proéminence 270 mesurée dans un plan P1.

En effet :
- si la proéminence 270 est trop longue/se dresse trop, cela dégrade les performances aérodynamiques (augmentation de la trainée, pertes aérodynamiques, ...) et le poids de l'ensemble propulsif, et
- si elle est trop petite, on n'aura pas besoin de prévoir des espacements hétérogènes.

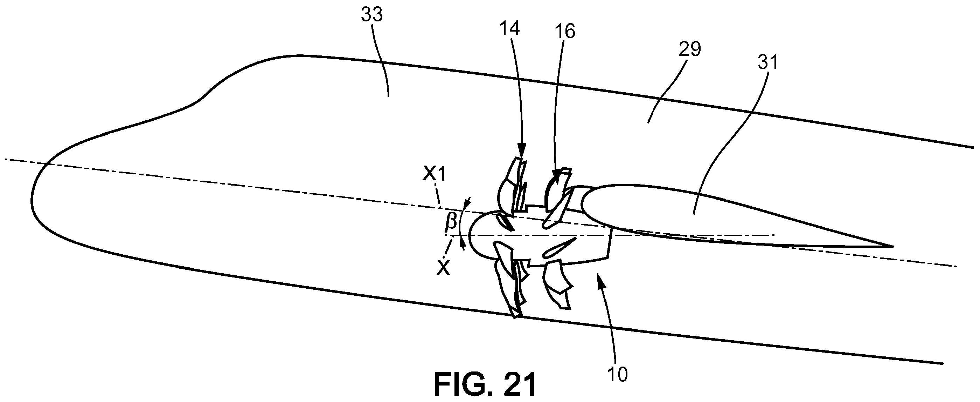

Encore un autre cas est traité ci-après quand, comme dans l'exemple de la figure 21, l'axe longitudinal du propulseur aéronautique (X) défini un angle *β* avec l'axe longitudinal de l'aéronef (X1), tel que (la valeur absolue de) l'angle ∥*β*∥ est peut varier entre 0,5° et 30°, de préférence entre 2° et 20°, ou encore de préférence entre 3° et 10°. L'axe longitudinal du fuselage (ou de l'aéronef, axe X1 ci-après) peut être défini comme l'axe de roulis de l'aéronef, qui peut correspondre à un axe allant du nez (à l'amont) à la queue (à l'aval) du fuselage, ou alternativement à l'axe qui passe par la position la plus à l'amont et la plus à l'aval du fuselage en vol de croisière. Ces axes X et X1 peuvent donc ne pas être parallèles (*β* ≠ 0°).

En effet, lorsqu'on installe le propulseur aéronautique, normalement celui-ci présente un certain angle d'inclinaison (*β*) par rapport à l'axe de l'aéronef. Cela permet de réduire l'incidence de l'écoulement perçue par les pales non-carénées lors des phases de décollage/atterrissage. Cela permet à la fois de réduire le bruit (réduction des décollements autour des pales liés à une sur-incidence), ainsi que les efforts 1P. Cela peut donc influencer la distribution hétérogène de pales 18 de la rangée statorique 16 dans la direction azimutale.

## Revendications

1. Ensemble propulsif pour un aéronef :
- l'ensemble comportant un propulseur aéronautique (10) ayant un axe longitudinal (X) et comprenant un carter (13) et, espacées l'une de l'autre suivant ledit axe longitudinal (X), une rangée annulaire amont de pales rotoriques (14), non carénées, et une rangée statorique aval de pales statoriques (16), non carénées et s'étendant autour du carter (13), deux pales adjacentes (18a, 18b) de ladite rangée statorique aval de pales statoriques (16) présentant entre elles, autour de l'axe longitudinal (X), un espacement azimutal (Δθᵢ) défini par l'angle entre des axes respectifs (180a,180b) :
-- soit d'adaptation d'un angle de calage desdites deux pales adjacentes, lorsque ces axes sont projetés dans un plan perpendiculaire à l'axe longitudinal (X) et si lesdites deux pales adjacentes sont à angle de calage variable,
-- soit radiaux à l'axe longitudinal (X) et passant par les extrémités radialement internes (23) ou les extrémités radialement externes (25) desdites deux pales adjacentes, respectivement, si lesdites deux pales adjacentes sont à angle de calage fixe,
-- soit, pour l'un desdits axes respectifs, d'adaptation d'un angle de calage de l'une desdites deux pales adjacentes, lorsque la pale est à angle de calage variable, et, l'autre, radial à l'axe longitudinal (X) et passant par l'extrémité radialement interne (23) ou par l'extrémité radialement externe (25) ou par le centre de gravité, est celui d'une pale à angle de calage fixe,
- l'ensemble comportant en outre une structure (27) de fixation du propulseur aéronautique (10) à l'aéronef, la structure de fixation (27) étant fixée au carter (13) et présentant, ou définissant, vu dans un plan (P1) perpendiculaire audit axe longitudinal (X) et intersectant au moins partiellement l'une des pales (18) de la rangée statorique aval (16), une proéminence (270) s'étendant entre deux pales (18) de ladite rangée statorique aval de pales statoriques (16) ou de façon axialement adjacente à elles, et
- autour de l'axe longitudinal (X), on définit une position angulaire à 12H comme positionnée verticalement vers le haut par rapport à l'axe longitudinal (X) et une position angulaire à 6H comme positionnée verticalement vers le bas par rapport à l'axe longitudinal (X),
l'ensemble étant tel que l'espacement azimutal entre lesdites deux pales adjacentes (18a,18b), quand elles sont situées de part et d'autre de la structure de fixation (27) et/ou de ladite proéminence (270), dans un plan perpendiculaire à l'axe longitudinal (X), est entre 1° et 75° supérieur, de préférence entre 5° et 40° supérieur, ou encore de préférence entre 8° et 20° supérieur, au plus petit espacement azimutal existant sur ladite rangée statorique aval de pales statoriques (16),
l'ensemble étant **caractérisé en ce qu'**il comporte au moins trois espacements azimutaux (Δθᵢ) distincts.

2. Ensemble propulsif selon la revendication 1 dans lequel :
- la proéminence (270) s'élève suivant une direction (A1) verticale ou formant, par rapport à la verticale et autour de l'axe longitudinal (X), un angle (δ) non nul, tel que 1°≤ δ ≤ 30°, de préférence 1°≤ δ ≤ 15°, et
les deux espacements azimutaux plus importants angulairement étant situés entre les deux pales adjacentes (18a,18b) disposées de part et d'autre de la proéminence (270) et/ou de la structure de fixation (27) et entre les positions angulaires à 2H et 4H et/ou à 8H et 10H, le plus faible angulairement étant situé entre les pales (18) disposées entre les positions angulaires à 4H et 8H.

3. Ensemble propulsif selon la revendication 1, dans lequel :
- la proéminence (270) s'élève suivant une direction (A1) verticale ou formant, par rapport à la verticale et autour de l'axe longitudinal (X), un anale (δ) non nul, tel que 1°≤ δ ≤ 15°,
- les espacements azimutaux entre 2 pales adjacentes diminuent de manière (strictement) monotone de la position azimutale à 12H vers la position azimutale à 6H.

4. Ensemble propulsif selon la revendication 1, dans lequel :
- la proéminence (270) s'élève suivant une direction (A) verticale ou formant, par rapport à la verticale et autour de l'axe longitudinal (X), un angle (δ) non nul, tel que 1°≤ δ ≤ 30°, de préférence 1°≤ δ ≤ 15°, et
les deux espacements azimutaux plus importants angulairement étant situés entre les deux pales adjacentes (18a,18b) disposées de part et d'autre de la proéminence (270) et/ou de la structure de fixation (27) et entre les positions angulaires à 4H et 8H, le plus faible angulairement étant situé entre les pales (18) disposées entre les positions angulaires à 2H et 4H et/ou à 8H et 10H.

5. Ensemble propulsif selon la revendication 1 dans lequel :
- la proéminence (270) s'étend suivant une direction (A2) horizontale ou formant, par rapport à l'horizontale et autour de l'axe longitudinal (X), un angle (δ) non nul, tel que 1°≤ δ ≤ 30°, de préférence 1°≤ δ ≤ 15°, et
- une dite pale de la rangée statorique aval (16) s'étend suivant la position angulaire à 3H ou suivant l'angle (δ), d'un côté ou de l'autre de la position angulaire à 3H ou à 9H.

6. Ensemble propulsif selon la revendication 1, dans lequel :
- la proéminence (270) s'étend suivant une direction (A2) horizontale ou formant, par rapport à l'horizontale et autour de l'axe longitudinal (X), un angle (δ) non nul, tel que 1°≤ δ ≤ 30°, de préférence 1°≤ δ ≤ 15°, et
les deux espacements azimutaux plus importants angulairement étant situés entre les deux pales adjacentes (18a,18b) disposées de part et d'autre de la proéminence (270) et/ou de la structure de fixation (27), et entre les positions angulaires à 4H et 8H et/ou à 10H et 2H, le plus faible angulairement étant situé entre les pales (18) disposées entre les positions angulaires à 2H et 4H.

7. Ensemble propulsif selon la revendication 1, dans lequel :
- la proéminence (270) s'étend suivant une direction (A) horizontale ou formant, par rapport à l'horizontale et autour de l'axe longitudinal (X), un angle (δ) non nul, tel que 1°≤ δ ≤ 30°, de préférence 1°≤ δ ≤ 15°, et,
les deux espacements azimutaux plus importants angulairement étant situés entre les deux pales adjacentes (18a,18b) disposées de part et d'autre de la proéminence (270) et/ou de la structure de fixation (27), et entre les positions angulaires à 1H30 et 4H30, le plus faible angulairement étant situé entre les pales (18) disposées entre les positions angulaires à 10H30 et 1H30 et/ou à 4H30 et 7H30.

8. Ensemble propulsif selon la revendication 1 seule ou en combinaison avec l'une quelconque des revendications 6 ou 7, dans lequel :
- la proéminence (270) s'étend suivant une direction (A2) horizontale ou formant, par rapport à l'horizontale et autour de l'axe longitudinal (X), un angle (δ) non nul, tel que 1°≤ δ ≤ 30°, de préférence 1°≤ δ ≤ 15°, et,
- les pales (16a,16b) de la série de pales de ladite rangée statorique aval (16) sont réparties, autour de l'axe longitudinal (X), symétriquement ou de manière homogène, par rapport aux positions angulaires à 3H-9H sur un secteur angulaire (Δψ) tel que : 360°- Δψ > 180°

9. Ensemble propulsif selon la revendication 1 seule ou en combinaison avec l'une quelconque des revendications 6 ou 7, dans lequel :
- la proéminence (270) s'élève suivant une direction (A1) verticale ou formant, par rapport à la verticale et autour de l'axe longitudinal (X), un angle (δ) non nul, et,
- les pales (18a, 18b) de la série de pales de ladite rangée statorique aval (16) sont réparties, autour de l'axe longitudinal (X), symétriquement ou de manière homogène, par rapport aux positions angulaires à 12H-6H sur un secteur angulaire (Δψ) tel que : 360°- Δψ> 180°

10. Ensemble propulsif selon la revendication 8, ou 9, dans lequel, tous les espacements azimutaux (Δθᵢ) sont adjacents et différents dans le secteur angulaire Δψ<180°.

11. Ensemble propulsif selon l'une quelconque des revendications précédentes, dans lequel il existe un plan (P1) perpendiculaire audit axe longitudinal (X) et intersectant au moins l'une des pales (18) du stator aval (16) dans lequel le rapport entre la hauteur (K) de la proéminence (270) et la hauteur d'au moins l'une des pales statoriques (18a, 18b) d'un côté ou de l'autre de la proéminence est tel que 0,02 ≤ K/L2 ≤0,9, ou de préférence 0,04 ≤ K/L2 ≤0,4.

12. Ensemble propulsif selon l'une quelconque des revendications précédentes, dans lequel l'axe de référence de la structure de fixation (27) et/ou de sa proéminence (270) est l'axe suivant lequel la structure de fixation ou la proéminence s'étend et de part et d'autre duquel existe la situation où (360°/V) +2°≤ Δθᵢ ≤ (360°/V)+45°, ou de préférence (360°/V) +5°≤ Δθᵢ ≤ (360°/V)+25°.

13. Ensemble propulsif selon l'une quelconque des revendications précédentes, dans lequel, sur la rangée statorique aval de pales statoriques (16), il existe un rapport C/E entre la corde, C, et l'espacement azimutal E entre deux pales de stator (16) consécutives, autour de de l'axe longitudinal (X) tel que C/E est inférieur à 3 sur l'ensemble de l'envergure, de préférence inférieur à 1 aux extrémités radialement externes (25) de deux pales axialement consécutives.

14. Aéronef présentant un axe longitudinal aéronef (X1), l'aéronef comprenant une structure (290) à laquelle est fixée ladite structure (27) de fixation du propulseur aéronautique (10) dudit ensemble propulsif selon l'une quelconque des revendications précédentes.

15. Aéronef selon la revendication 14 comprenant un nombre paire de dits propulseurs aéronautiques, dans lequel :
la structure (290) de l'aéronef comprend un fuselage (33),
le fuselage (33) présente un plan de symétrie (P2) passant par l'axe longitudinal aéronef (X1) et parallèle à des plans passant par les positions angulaires à 6H et 12H de chaque propulseur aéronautique,
ledit nombre paire de propulseurs aéronautiques inclut un couple, aligné perpendiculairement au plan de symétrie (P2), de rangées annulaires amont de pales rotoriques (14) de deux desdits propulseurs aéronautiques (10),
les pales rotoriques dudit couple de rangées annulaires amont de pales rotoriques (14), situées de part et d'autre du fuselage, tournent dans des sens opposés, et
la répartition azimutale des pales (18a,18b) des rangées annulaires aval de pales statoriques (16), entre lesdits deux propulseurs aéronautiques (10), est symétrique par rapport audit plan (P2) de symétrie.

## Patentansprüche

1. Antriebsanordnung für ein Luftfahrzeug:
- wobei die Anordnung einen Luftfahrtantrieb (10) umfasst, welcher eine Längsachse (X) aufweist und ein Gehäuse (13) und, voneinander beabstandet entlang der Längsachse (X), eine stromaufwärtige ringförmige Reihe von Rotorschaufeln (14), welche unverkleidet sind, und eine stromabwärtige Statorreihe von Statorschaufeln (16), welche unverkleidet sind und sich um das Gehäuse (13) herum erstrecken, umfasst, wobei zwei benachbarte Schaufeln (18a,18b) der stromabwärtigen Statorreihe von Statorschaufeln (16) zwischen sich, um die Längsachse (X) herum, einen azimutalen Abstand (Δθᵢ) aufweisen, welcher definiert ist durch den Winkel zwischen jeweiligen Achsen (180a,180b):
-- entweder zur Anpassung eines Einstellwinkels der zwei benachbarten Schaufeln, wenn diese Achsen in eine Ebene senkrecht zur Längsachse (X) projiziert werden und wenn die zwei benachbarten Schaufeln einen verstellbaren Einstellwinkel aufweisen,
-- oder radial zur Längsachse (X) und durch die radial inneren Enden (23) oder die radial äußeren Enden (25) der zwei benachbarten Schaufeln gehend, jeweils, wenn die zwei benachbarten Schaufeln einen festen Einstellwinkel aufweisen,
-- oder, für eine der jeweiligen Achsen, zur Anpassung eines Einstellwinkels einer der zwei benachbarten Schaufeln, wenn die Schaufel einen verstellbaren Einstellwinkel aufweist, und, für die andere, radial zur Längsachse (X) und durch das radial innere Ende (23) oder durch das radial äußere Ende (25) oder durch den Schwerpunkt gehend, derjenige einer Schaufel mit festem Einstellwinkel ist,
- wobei die Anordnung ferner eine Befestigungsstruktur (27) des Luftfahrtantriebs (10) an dem Luftfahrzeug umfasst, wobei die Befestigungsstruktur (27) an dem Gehäuse (13) befestigt ist und, gesehen in einer Ebene (P1) senkrecht zu der Längsachse (X) und mindestens teilweise eine der Schaufeln (18) der stromabwärtigen Statorreihe (16) schneidend, einen Vorsprung (270) aufweist oder definiert, welcher sich zwischen zwei Schaufeln (18) der stromabwärtigen Statorreihe von Statorschaufeln (16) oder axial benachbart zu diesen erstreckt, und
- wobei um die Längsachse (X) herum, eine Winkelposition bei 12H als vertikal nach oben bezüglich der Längsachse (X) positioniert definiert ist, und eine Winkelposition bei 6H als vertikal nach unten bezüglich der Längsachse (X) positioniert definiert ist, wobei die Anordnung derart ausgestaltet ist, dass der azimutale Abstand zwischen den zwei benachbarten Schaufeln (18a,18b), wenn diese sich beiderseits der Befestigungsstruktur (27) und/oder des Vorsprungs (270) befinden, in einer Ebene senkrecht zur Längsachse (X), zwischen 1° und 75° größer, vorzugsweise zwischen 5° und 40° größer, oder noch weiter bevorzugt zwischen 8° und 20° größer ist, als der kleinste azimutale Abstand, welcher auf der stromabwärtigen Statorreihe von Statorschaufeln (16) vorhanden ist,
wobei die Anordnung **dadurch gekennzeichnet ist, dass** sie mindestens drei unterschiedliche azimutale Abstände Δθi umfasst.

2. Antriebsanordnung nach Anspruch 1, wobei:
- der Vorsprung (270) sich entlang einer vertikalen Richtung (A1) erhebt oder bezüglich der Vertikalen und um die Längsachse (X) herum einen Winkel (δ) ungleich Null bildet, wie beispielsweise 1° ≤ δ ≤ 30°, vorzugsweise 1° ≤ δ ≤ 15°, und
- die zwei winkelmäßig größten azimutalen Abstände sich zwischen den zwei benachbarten Schaufeln (18a,18b) befinden, welche beiderseits des Vorsprungs (270) und/oder der Befestigungsstruktur (27) und zwischen den Winkelpositionen bei 2H und 4H und/oder bei 8H und 10H angeordnet sind, wobei der winkelmäßig kleinste sich zwischen den Schaufeln (18) befindet, welche zwischen den Winkelpositionen bei 4H und 8H angeordnet sind.

3. Antriebsanordnung nach Anspruch 1, wobei:
- der Vorsprung (270) sich entlang einer vertikalen Richtung (A1) erhebt oder bezüglich der Vertikalen und um die Längsachse (X) herum einen Winkel (δ) ungleich Null bildet, wie beispielsweise 1° ≤ δ ≤ 15°,
- die azimutalen Abstände zwischen 2 benachbarten Schaufeln (strikt) monoton von der azimutalen Position bei 12H zu der azimutalen Position bei 6H hin abnehmen.

4. Antriebsanordnung nach Anspruch 1, wobei:
- der Vorsprung (270) sich entlang einer vertikalen Richtung (A) erhebt oder bezüglich der Vertikalen und um die Längsachse (X) herum einen Winkel (δ) ungleich Null bildet, wie beispielsweise 1° ≤ δ ≤ 30°, vorzugsweise 1° ≤ δ ≤ 15°, und
- die zwei winkelmäßig größten azimutalen Abstände sich zwischen den zwei benachbarten Schaufeln (18a,18b) befinden, welche beiderseits des Vorsprungs (270) und/oder der Befestigungsstruktur (27) und zwischen den Winkelpositionen bei 4H und 8H angeordnet sind, wobei der winkelmäßig kleinste sich zwischen den Schaufeln (18) befindet, welche zwischen den Winkelpositionen bei 2H und 4H und/oder bei 8H und 10H angeordnet sind.

5. Antriebsanordnung nach Anspruch 1, wobei:
- der Vorsprung (270) sich entlang einer horizontalen Richtung (A2) erstreckt oder bezüglich der Horizontalen und um die Längsachse (X) herum einen Winkel (δ) ungleich Null bildet, wie beispielsweise 1° ≤ δ ≤ 30°, vorzugsweise 1° ≤ δ ≤ 15°, und
- eine Schaufel der stromabwärtigen Statorreihe (16) sich entlang der Winkelposition bei 3H erstreckt oder entlang des Winkels (δ), auf einer Seite oder auf der anderen Seite der Winkelposition bei 3H oder bei 9H.

6. Antriebsanordnung nach Anspruch 1, wobei:
- der Vorsprung (270) sich entlang einer horizontalen Richtung (A2) erstreckt oder bezüglich der Horizontalen und um die Längsachse (X) herum einen Winkel (δ) ungleich Null bildet, wie beispielsweise 1° ≤ δ ≤ 30°, vorzugsweise 1° ≤ δ ≤ 15°, und
- die zwei winkelmäßig größten azimutalen Abstände sich zwischen den zwei benachbarten Schaufeln (18a,18b) befinden, welche beiderseits des Vorsprungs (270) und/oder der Befestigungsstruktur (27) und zwischen den Winkelpositionen bei 4H und 8H und/oder bei 10H und 2H angeordnet sind, wobei der winkelmäßig kleinste sich zwischen den Schaufeln (18) befindet, welche zwischen den Winkelpositionen bei 2H und 4H angeordnet sind.

7. Antriebsanordnung nach Anspruch 1, wobei:
- der Vorsprung (270) sich entlang einer horizontalen Richtung (A) erstreckt oder bezüglich der Horizontalen und um die Längsachse (X) herum einen Winkel (δ) ungleich Null bildet, wie beispielsweise 1° ≤ δ ≤ 30°, vorzugsweise 1° ≤ δ ≤ 15°, und,
- die zwei winkelmäßig größten azimutalen Abstände sich zwischen den zwei benachbarten Schaufeln (18a,18b) befinden, welche beiderseits des Vorsprungs (270) und/oder der Befestigungsstruktur (27) und zwischen den Winkelpositionen bei 1H30 und 4H30 angeordnet sind, wobei der winkelmäßig kleinste sich zwischen den Schaufeln (18) befindet, welche zwischen den Winkelpositionen bei 10H30 und 1H30 und/oder bei 4H30 und 7H30 angeordnet sind.

8. Antriebsanordnung nach Anspruch 1 allein oder in Kombination mit einem beliebigen der Ansprüche 6 oder 7, wobei:
- der Vorsprung (270) sich entlang einer horizontalen Richtung (A2) erstreckt oder bezüglich der Horizontalen und um die Längsachse (X) herum einen Winkel (δ) ungleich Null bildet, wie beispielsweise 1° ≤ δ ≤ 30°, vorzugsweise 1° ≤ δ ≤ 15°, und,
- die Schaufeln (16a,16b) der Reihe von Schaufeln der stromabwärtigen Statorreihe (16) um die Längsachse (X) herum symmetrisch oder homogen bezüglich der Winkelpositionen bei 3H-9H verteilt sind auf einem Winkelsektor (Δψ), so dass: 360° - Δψ > 180°.

9. Antriebsanordnung nach Anspruch 1 allein oder in Kombination mit einem beliebigen der Ansprüche 6 oder 7, wobei:
- der Vorsprung (270) sich entlang einer vertikalen Richtung (A1) erhebt oder bezüglich der Vertikalen und um die Längsachse (X) herum einen Winkel (δ) ungleich Null bildet, und,
- die Schaufeln (18a, 18b) der Reihe von Schaufeln der stromabwärtigen Statorreihe (16) um die Längsachse (X) herum symmetrisch oder homogen bezüglich der Winkelpositionen bei 12H-6H verteilt sind auf einem Winkelsektor (Δψ), so dass: 360° - Δψ > 180°.

10. Antriebsanordnung nach Anspruch 8 oder 9, wobei alle azimutalen Abstände (Δθᵢ) benachbart und unterschiedlich sind in dem Winkelsektor Δψ<180°.

11. Antriebsanordnung nach einem der vorangegangenen Ansprüche, wobei eine Ebene (P1) senkrecht zu der Längsachse (X) existiert und welche mindestens eine der Schaufeln (18) des stromabwärtigen Stators (16) schneidet, in welcher das Verhältnis zwischen der Höhe (K) des Vorsprungs (270) und der Höhe von mindestens einer der Statorschaufeln (18a, 18b) auf einer Seite oder auf der anderen Seite des Vorsprungs so ist, dass 0,02 ≤ K/L2 ≤0,9, oder vorzugsweise 0,04 ≤ K/L2 ≤0,4.

12. Antriebsanordnung nach einem der vorangegangenen Ansprüche, wobei die Bezugsachse der Befestigungsstruktur (27) und/oder ihres Vorsprungs (270) die Achse ist, entlang welcher sich die Befestigungsstruktur oder der Vorsprung erstreckt und beiderseits welcher die Situation existiert, in welcher (360°/V) +2° ≤ Δθᵢ ≤ (360°/ V)+45°, oder vorzugsweise (360°/V) +5° ≤ Δθᵢ ≤ (360°/V)+25°.

13. Antriebsanordnung nach einem beliebigen der vorangegangenen Ansprüche, wobei auf der stromabwärtigen Statorreihe von Statorschaufeln (16) ein Verhältnis C/E zwischen der Profilsehne, C, und dem azimutalen Abstand E zwischen zwei aufeinanderfolgenden Statorschaufeln (16) existiert, um die Längsachse (X) herum, so dass C/E über die gesamte Spannweite kleiner als 3 ist, vorzugsweise kleiner als 1 an den radial äußeren Enden (25) von zwei axial aufeinanderfolgenden Schaufeln.

14. Luftfahrzeug, welches eine Längsachse des Luftfahrzeugs (X1) aufweist, wobei das Luftfahrzeug eine Struktur (290) umfasst, an welcher die Befestigungsstruktur (27) des Luftfahrtantriebs (10) der Antriebsanordnung nach einem beliebigen der vorangegangenen Ansprüche befestigt ist.

15. Luftfahrzeug nach Anspruch 14, umfassend eine gerade Anzahl von Luftfahrtantrieben, in welchem:
die Struktur (290) des Luftfahrzeugs einen Rumpf (33) umfasst,
der Rumpf (33) eine Symmetrieebene (P2) aufweist, welche durch die Längsachse des Luftfahrzeugs (X1) verläuft und parallel zu Ebenen ist, welche durch die Winkelpositionen bei 6H und 12H jedes Luftfahrtantriebs verlaufen,
die gerade Anzahl von Luftfahrtantrieben ein Paar umfasst, welches senkrecht zur Symmetrieebene (P2) ausgerichtet ist, von stromaufwärtigen ringförmigen Reihen von Rotorschaufeln (14) von zwei der Luftfahrtantriebe (10),
die Rotorschaufeln des Paars von stromaufwärtigen ringförmigen Reihen von Rotorschaufeln (14), welche sich beiderseits des Rumpfes befinden, sich in entgegengesetzten Richtungen drehen, und
die azimutale Verteilung der Schaufeln (18a,18b) der stromabwärtigen ringförmigen Reihen von Statorschaufeln (16), zwischen den zwei Luftfahrtantrieben (10), symmetrisch bezüglich der Symmetrieebene (P2) ist.

## Claims

1. Propulsion assembly for an aircraft:
- the assembly comprising an aeronautical thruster (10) having a longitudinal axis (X) and comprising a casing (13) and, spaced apart from each other along said longitudinal axis (X), an upstream annular row of rotor blades (14) which are unducted and a downstream stator row of stator blades (16) which are unducted and extend around the casing (13), two adjacent blades (18a, 18b) of said downstream stator row of stator blades (16) having an azimuthal spacing (Δθᵢ) between them, about the longitudinal axis (X), that is defined by the angle between respective axes (180a, 180b):
- these either being pitch angle adaptation axes of said two adjacent blades, when these axes are projected onto a plane perpendicular to the longitudinal axis (X) and if said two adjacent blades have a variable pitch angle,
- or axes radial to the longitudinal axis (X) and passing through the radially internal ends (23) or the radially external ends (25) of said two adjacent blades, respectively, if said two adjacent blades have a fixed pitch angle,
- or, for one of said respective axes, a pitch angle adaptation axis of one of said two adjacent blades, when the blade has a variable pitch angle, and the other being radial to the longitudinal axis (X) and passing through the radially internal end (23) or through the radially external end (25) or through the center of gravity, when the blade has a fixed pitch angle,
- the assembly further comprising an attachment structure (27) for fixing the aeronautical thruster (10) to the aircraft, the attachment structure (27) being fixed to the casing (13) and having, or defining, when viewed in a plane (P1) perpendicular to said longitudinal axis (X) and intersecting at least (partially) one of the blades (18) of the downstream stator row (16), a protrusion (270) extending between two blades (18) of said downstream stator row of stator blades (16) or axially adjacent to them, and
- about the longitudinal axis (X), an angular position at 12 o'clock is defined as being positioned vertically upwards relative to the longitudinal axis (X) and an angular position at 6 o'clock as positioned vertically downwards relative to the longitudinal axis (X),
the assembly being such as the azimuthal spacing between said two adjacent blades (18a, 18b), when they are located one on either side of the attachment structure (27) and/or of said protrusion (270), in a plane perpendicular to the longitudinal axis (X), is between 1° and 75° greater, preferably between 5° and 40° greater, or more preferably between 8° and 20° greater, than the smallest azimuthal spacing existing in said downstream stator row of stator blades (16),
the assembly being **characterized in that** it comprises at least three different azimuthal spacings (Δθᵢ).

2. Propulsion assembly according to claim 1, wherein:
- the protrusion (270) extends upwards in a direction (A1) which is vertical or forms a non-zero angle (δ) relative to the vertical and about the longitudinal axis (X) such that 1°≤ δ ≤ 30°, preferably 1°≤ δ ≤ 15°, and
- the two azimuthal spacings (Δθᵢ) which are angularly largest being located between the two adjacent blades (18a, 18b) arranged one on either side of the protrusion (270) and/or of the attachment structure (27) and between the angular positions at 2 o'clock and 4 o'clock and/or at 8 o'clock and 10 o'clock, the angularly smallest being located between the blades (18) arranged between the angular positions at 4 o'clock and 8 o'clock.

3. Propulsion assembly according to claim 1, wherein:
- the protrusion (270) extends upwards in a direction (A1) which is vertical or forms a non-zero angle (δ) relative to the vertical and about the longitudinal axis (X) such that 1° ≤ δ ≤ 15°,
- the azimuthal spacings between two adjacent blades decrease in a (strictly) monotonic manner from the azimuthal position at 12 o'clock towards the azimuthal position at 6 o'clock.

4. Propulsion assembly according to claim 1, wherein:
- the protrusion (270) extends upwards in a direction (A) which is vertical or forms a non-zero angle (δ) relative to the vertical and about the longitudinal axis (X) such that 1°≤ δ ≤ 30°, preferably 1°≤ δ ≤ 15°, and
- the two azimuthal spacings (Δθᵢ) which are angularly largest being located between the two adjacent blades (18a, 18b) arranged one on either side of the protrusion (270) and/or of the attachment structure (27) and between the angular positions at 4 o'clock and 8 o'clock, the angularly smallest being located between the blades (18) arranged between the angular positions at 2 o'clock and 4 o'clock and/or at 8 o'clock and 10 o'clock.

5. Propulsion assembly according to claim 1, wherein:
- the protrusion (270) extends in a direction (A2) which is horizontal or forms a non-zero angle (δ) relative to the horizontal and about the longitudinal axis (X) such that 1°≤ δ ≤ 30°, preferably 1°≤ δ ≤ 15°, and
- a said blade of the downstream stator row (16) extends along the angular position at 3 o'clock, or along angle (δ), on one side or the other of the angular position at 3 o'clock or at 9 o'clock.

6. Propulsion assembly according to claim 1, wherein:
- the protrusion (270) extends in a direction (A2) which is horizontal or forms a non-zero angle (δ) relative to the horizontal and about the longitudinal axis (X) such that 1°≤ δ ≤ 30°, preferably 1°≤ δ ≤ 15°, and
- the two azimuthal spacings (Δθᵢ) which are angularly largest being located between the two adjacent blades (18a, 18b) arranged one on either side of the protrusion (270) and/or of the attachment structure (27) and between the angular positions at 4 o'clock and 8 o'clock and/or at 10 o'clock and 2 o'clock, the angularly smallest being located between the blades (18) arranged between the angular positions at 2 o'clock and 4 o'clock.

7. Propulsion assembly according to claim 1, wherein:
- the protrusion (270) extends in a direction (A) which is horizontal or forms a non-zero angle (δ) relative to the horizontal and about the longitudinal axis (X) such that 1°≤ δ ≤ 30°, preferably 1°≤ δ ≤ 15°, and
- the two azimuthal spacings (Δθᵢ)which are angularly largest being located between the two adjacent blades (18a, 18b) arranged one on either side of the protrusion (270) and/or of the attachment structure (27) and between the angular positions at 1:30 and 4:30 o'clock, the angularly smallest being located between the blades (18) arranged between the angular positions at 10:30 and 1:30 o'clock and/or at 4:30 and 7:30 o'clock.

8. Propulsion assembly according to claims 1 alone or in combination with any one of claims 6 or 7, wherein:
- the protrusion (270) extends in a direction (A2) which is horizontal or forms a non-zero angle (δ) relative to the horizontal and about the longitudinal axis (X) such that 1°≤ δ ≤ 30°, preferably 1°≤ δ ≤ 15°, and
- the blades (16a, 16b) of the series of blades of said downstream stator row (16) are distributed symmetrically or homogeneously about the longitudinal axis (X) relative to the angular positions at 3 o'clock-9 o'clock, over an angular sector (Δψ) such that: 360°- Δψ > 180°.

9. Propulsion assembly according to claim 1 alone or in combination with any one of claims 6 or 7, wherein:
- the protrusion (270) extends upward in a direction (A1) which is vertical or forms a non-zero angle (δ) relative to the vertical and about the longitudinal axis (X), and
- the blades (18a, 18b) of the series of blades of said downstream stator row (16) are distributed symmetrically or homogeneously about the longitudinal axis (X) relative to the angular positions at 12 o'clock-6 o'clock, over an angular sector (Δψ) such that: 360°- Δψ> 180°.

10. Propulsion assembly according to claim 8, or 9, wherein all the azimuthal spacings (Δθᵢ) are adjacent and different in angular sector Δψ<180°.

11. Propulsion assembly according to any one of the preceding claims, wherein there exists a plane (P1) perpendicular to said longitudinal axis (X) and intersecting at least one of the blades (18) of the downstream stator (16), where the ratio between the height (K) of the protrusion (270) and the height of at least one of the stator blades (18a, 18b) on one side or the other of the protrusion is such that 0.02 ≤ K/L2 ≤0.9, or preferably 0.04 ≤ K/L2 ≤0.4.

12. Propulsion assembly according to any one of the preceding claims, wherein the reference axis of the attachment structure (27) and/or of its protrusion (270) is the axis along which the attachment structure or the protrusion extends, and on either side thereof there exists the situation where (360°/V) +2°≤ Δθᵢ ≤ (360°/V)+45°, or preferably (360°/V) +5°≤ Δθᵢ ≤ (360°/V)+25°.

13. Propulsion assembly according to any one of the preceding claims, wherein, in the downstream stator row (16) of stator blades, there is a ratio C/E of the chord C to the azimuthal spacing E between two consecutive stator blades (16) about the longitudinal axis (X), such that C/E is less than 3 over the entire span, preferably less than 1 at the radially external ends (25) of two axially consecutive blades.

14. Aircraft having a longitudinal aircraft axis (X1), the aircraft comprising a structure (290) to which is fixed said attachment structure (27) for fixing the aeronautical thruster (10) of said propulsion assembly according to any one of the preceding claims.

15. Aircraft according to claim 14, comprising an even number of said aeronautical thrusters, wherein:
the structure (290) of the aircraft comprises a fuselage (33),
the fuselage (33) has a plane of symmetry (P2) passing through the aircraft longitudinal axis (X1) and parallel to planes passing through the angular positions at 6 o'clock and 12 o'clock of each aeronautical thruster,
said even number of aeronautical thrusters includes a pair, aligned perpendicularly to the plane of symmetry (P2), of upstream annular rows (14) of rotor blades of two of said aeronautical thrusters (10),
the rotor blades of said pair of upstream annular rows (14) of rotor blades, located one on either side of the fuselage, rotate in opposite directions, and
the azimuthal distribution of the blades (18a, 18b) of the downstream annular rows (16) of stator blades, between said two aeronautical thrusters (10), is symmetrical relative to said plane (P2) of symmetry.
